# EUROPÄISCHE PATENTSCHRIFT

(11) **EP 2 951 361 B1**
(45) Veröffentlichungstag und Bekanntmachung des Hinweises auf die Patenterteilung: **31.05.2017**
(21) Anmeldenummer: 13805775.7
(22) Anmeldetag: 03.12.2013
(51) Int. Cl.: E03C 1/04, F16K 31/00, G05D 7/01

(54) **SANITÄRES EINBAUTEIL SOWIE SANITÄRARMATUR MIT EINEM SOLCHEN EINBAUTEIL**
FLOW REGULATOR AND SANITARY FITTING WITH FLOW REGULATOR
REGULATEUR DE DEPIT ET ROBINETTERIE SANITAIRE AVEC REGULATEUR DE DEPIT

(30) Priorität: 29.01.2013 DE 202013000860 U
(43) Veröffentlichungstag der Anmeldung: 09.12.2015
(73) Patentinhaber: Neoperl GmbH, 79379 Müllheim (DE)
(72) Erfinder: TEMPEL, Marc, 79111 Freiburg (DE); WEIS, Christoph, 79379 Müllheim (DE)
(74) Vertreter: Börjes-Pestalozza, Henrich
(86) Internationale Anmeldenummer: PCT/EP2013/003642
(87) Internationale Veröffentlichungsnummer: WO 2014/117795

(56) Entgegenhaltungen:
- US-A- 2 607 369
- US-A- 3 368 758

## Beschreibung

Die Erfindung betrifft ein sanitäres Einbauteil, mit einer, in einem Durchströmungsweg des Einbauteiles angeordneten Funktionseinheit, die ein beweglich angeordnetes Stellelement aufweist, das entlang eines Verstellweges wenigstens zwischen einer ersten Stellposition und einer zweiten Stellposition lageveränderbar ist, wobei eine temperatursensitive Antriebseinheit das Stellelement derart beaufschlagt, dass das Stellelement durch eine Temperaturänderung an der Antriebseinheit längs des Verstellweges lageveränderbar ist.

Die Erfindung befasst sich auch mit einer Sanitärarmatur, die einen Wasserzulauf und einen Wasserauslauf hat.

Die Erfindung betrifft schließlich auch ein Verfahren zur Steuerung einer Durchflussmenge von strömendem Wasser mittels einem sanitären Einbauteil.

Derartige Einbauteile sind in der Sanitärtechnik als Durchflussmengenregler bekannt und werden dazu eingesetzt, Wasser zu sparen.

Die bekannten Durchflussmengenregler bewirken, dass die Verweilzeit des Wassers oder sonstigen flüssigen Mediums in der Wasserleitung erhöht wird. Dies kann besonders bei Warmwasserleitungen, die nicht permanent auf Temperatur gehalten werden und zwischen den Benutzungszyklen abkühlen, zur Folge haben, dass sich insbesondere die bakterielle Belastung des transportieren Wassers oder sonstigen Mediums erhöht. Zudem verlängert es bei Warmwasserleitungen, die erkaltet waren, die Zeit vom Öffnen der Armatur bis zum Ausfließen von warmen Wasser - je nach Länge der erkalteten Leitung -, was zur Verärgerung des Benutzers und zu unnützem Wasserverbrauch führt.

Aus der US 3 368 758 A ist bereits ein Brausekopf mit einem sanitären Einbauteil der eingangs erwähnten Art vorbekannt, welches Einbauteil zur temperatursensitiven Regelung des durch den Brausekopf durchströmenden Wassers bestimmt ist, um ein Verbrühen einer unter dem Brausekopf stehenden Person durch überheiß zuströmendes Wasser zu verhindern. Das in dem vorbekannten Brausekopf vorgesehene Einbauteil hat dazu eine als Ventil ausgebildete Funktionseinheit mit einem Stellelement, welches Stellelement über eine temperatursensitive Antriebseinheit derart beaufschlagt wird, dass das Stellelement durch eine Temperaturänderung an der Antriebseinheit längs eines Verstellweges lageveränderbar und in Abhängigkeit der Temperatur des vorbeiströmenden Wassers zwischen einer Offen- und einer Schließstellung des Ventils bewegbar ist.

Der Erfindung liegt die Aufgabe zugrunde, ein sanitäres Einbauteil mit verbesserten Gebrauchseigenschaften zu schaffen.

Zur Lösung dieser Aufgabe werden erfindungsgemäß bei einem sanitären Einbauteil der eingangs beschriebenen Art die Merkmale des Anspruchs 1 vorgeschlagen. Somit ist insbesondere bei einem Einbauteil der eingangs beschriebenen Art vorgesehen, dass die Funktionseinheit ein beweglich angeordnetes Stellelement aufweist, das entlang eines Verstellweges wenigstens zwischen einer ersten Stellposition und einer zweiten Stellposition lageveränderbar ist, dass die definierte Volumenstromabhängigkeit durch eine Lageveränderung des Stellelements längs des Verstellweges veränderbar ist und dass eine temperatursensitive Antriebseinheit das Stellelement derart beaufschlagt, dass das Stellelement durch eine Temperaturänderung an der Antriebseinheit längs des Verstellweges lageveränderbar ist. Dabei ist unter einer Lageveränderung des Stellelementes längs des Verstellweges nicht nur eine translatorische Bewegung gemeint, - vielmehr kann diese Lageveränderung auch als rotatorische Bewegung vollzogen werden. Das erfindungsgemäße Einbauteil erlaubt somit eine unterschiedliche Behandlung von Warmwasser und Kaltwasser. Somit erlaubt das erfindungsgemäße Einbauteil, dass Wasser, welches nach einer längeren Phase der Nichtbenutzung des Einbauteils in einer Wasserleitung abgekühlt ist, schneller aus der Wasserleitung ausfließen kann, als das darauf folgende Warmwasser, welches nach Möglichkeit nur in geringem Umfang verbraucht werden sollte.

Die erfindungsgemäße Veränderung der jeweils definierten Volumenstromabhängigkeit kann beispielsweise durch einen mathematischen Parameter der Volumenstromabhängigkeit beschrieben werden, der durch eine Lageveränderung des Stellelements veränderlich ist und verändert wird. Der Parameter kann beispielsweise einen additiven Anteil, eine Steigung (Strömungswiderstand), eine Funktionalität der Volumenstromabhängigkeit (z.B. einen Exponenten) und/oder einen Schrankenwert der Volumenstromabhängigkeit beschreiben. Die Volumenstromabhängigkeit beschreibt hierbei die Abhängigkeit der Durchflussmenge (bevorzugt bezogen auf eine Zeiteinheit) von einem Druck.

Das erfindungsgemäße Einbauteil kann beispielsweise zum Einsetzen oder Einschrauben in ein Auslaufmundstück oder als Zwischenstück in einer Leitung ausgebildet sein.

Bei einer Ausgestaltung der Erfindung kann vorgesehen sein, dass die temperatursensitive Antriebseinheit in wenigstens einer Dimension oder Raumrichtung eine temperaturabhängige Ausdehnung aufweist. Von Vorteil ist dabei, dass die Temperatur des Mediums, insbesondere des Wassers, welches den Durchströmungsweg durchströmt, einfach in eine korrespondierende Stellposition des Stellelements umsetzbar ist. Bevorzugt weist die temperaturabhängige Ausdehnung einen Ausdehnungskoeffizienten auf, welcher größer ist als der Ausdehnungskoeffizient eines aufnehmenden Gehäuses. Von Vorteil ist dabei, dass eine Stellbewegung zur Lageveränderung relativ zu dem Gehäuse durch eine Temperaturänderung im strömenden Medium hervorrufbar ist.

Bei einer Ausgestaltung der Erfindung kann vorgesehen sein, dass eine Rückstellfeder vorhanden ist, welche das Stellelement bei einer Abkühlung der Antriebseinheit auf oder unter eine erste Temperatur zurückstellt, insbesondere in die erste Stellposition. Somit ist erreichbar, dass die erste Stellposition als Ausgangsposition eingenommen wird, sobald eine hinreichende Abkühlung des strömenden Mediums und somit der Antriebseinheit stattgefunden hat.

Bei einer Ausgestaltung der Erfindung kann vorgesehen sein, dass die temperatursensitive Antriebseinheit eine mit einem temperatursensitivem Medium befüllte Aufnahmekammer aufweist, wobei wenigstens eine bewegliche Kammerwand mit dem Stellelement in Wirkverbindung steht und das Stellelement beaufschlagt. Bevorzugt ist die bewegliche Kammerwand an einem Kolben ausgebildet, welcher mit dem Stellelement in Wirkverbindung steht. Von Vorteil ist dabei, dass eine wirkungsvolle Umsetzung von Temperaturänderungen des strömenden Mediums in eine Stellbewegung des Stellelements erreichbar ist. Bevorzugt weist das temperatursensitive Medium einen Ausdehnungskoeffizienten auf, welcher größer ist als der Ausdehnungskoeffizient einer Kammerwand der Aufnahmekammer. Somit ist eine Relativbewegung des Kolbens öder der bewegten Kammerwand relativ zu der übrigen Aufnahmekammer durch Temperaturänderungen erzwingbar. Mit einer bereits erwähnten Rückstellfeder ist die Rückholbewegung der Abkühlung unterstützbar.

Bei einer Ausgestaltung der Erfindung kann vorgesehen sein, dass die Antriebseinheit ein Antriebselement aus einem Material mit Formgedächtnis wie z.B. Memory Shape Metals aufweist. Ein Antriebselement aus einem Material mit Formgedächtnis bietet sich insbesondere an, wenn die Lageveränderung des Stellelementes längs des Verstellweges als rotatorische Bewegung vollzogen werden soll. Von Vorteil ist dabei, dass eine auf das Stellelement eingebrachte Vortriebskraft begrenzbar ist, auch wenn eine unerwartet große Erwärmung des strömenden Mediums auftritt. Somit ist eine mechanische Beanspruchung eines aufnehmenden Gehäuses durch übermäßige -Spannungen vermeidbar, weil die Antriebselemente aus Memory Shape Metals in der Regel mit einer Eigenelastizität versehen sind. Besonders günstig ist es hierbei, wenn das Antriebselement in federförmiger Gestalt, beispielsweise als Schrauben-, Blatt-, Spiralfeder oder als Feder mit einer anderen Gestalt ausgebildet ist.

Bei einer Ausgestaltung der Erfindung kann vorgesehen sein, dass die Antriebseinheit wenigstens ein Bimetall-Element, insbesondere eine Bimetall-Scheibe, aufweist. Von Vorteil ist dabei, dass ein einfaches Mittel zur Erzeugung der Stellbewegung der Lageveränderung bereitgestellt ist, däss eine translatorische oder auch eine rotatorische Bewegung des Stellelementes zu bewirken vermag. Zur Vergrößerung des insgesamt erreichbaren Stellwegs kann vorgesehen sein, dass die Antriebseinheit mehrere hintereinander angeordnete Bimetall-Scheiben aufweist. Besonders günstig ist es dabei, wenn die Bimetall-Scheiben bezüglich ihrer Ausdehnungs- oder Arbeitsrichtung hintereinander in Reihe angeordnet sind.

Es kann vorgesehen sein, dass der Parameter eine Materialeigenschaft, beispielsweise eine Feder- und/oder Elastizitätskonstante oder eine geometrische Eigenschaft, beispielsweise eine lichte Weite einer Öffnung, der Funktionseinheit beschreibt.

Bei einer Ausgestaltung der Erfindung kann vorgesehen sein, dass mit dem Stellelement in der ersten Stellposition eine Durchströmungsöffnung im Durchströmungsweg freigegeben oder geöffnet ist und/oder dass mit dem Stellelement in der zweiten Stellposition die oder eine Durchströmöffnung im Durchströmungsweg verschlossen oder verschließbar ist. Von Vorteil ist dabei, dass die definierte Volumenstromabhängigkeit beeinflussbar ist, indem die Durchströmöffnung freigebbar oder öffenbar ist. Die Durchströmöffnung kann einen Bypass bilden. Durch Freigeben der Durchströmöffnung kann in der Volumenstromabhängigkeit ein zusätzlicher Anteil in der Durchströmungsmenge zu der Mengenregelungsfunktion addiert werden. Die Durchströmöffnung kann einen Bypass zu der Funktionseinheit bilden, beispielsweise um einen abschaltbaren additiven Anteil der jeweils eingestellten Volumenstromabhängigkeit zu definieren oder um einen Anteil der Volumenstromabhängigkeit zu deaktivieren oder deaktivierbar zu gestalten.

Bei einer Ausgestaltung der Erfindung kann vorgesehen sein, dass der Verstellweg zumindest an einem der zweiten Stellposition näheren Wegende anschlagfrei eingerichtet ist. Von Vorteil ist dabei, dass eine Entwicklung übermäßiger Kräfte nach Erreichen der zweiten Stellposition, wie sie beispielsweise bei weiterer unkontrollierter, thermischer Ausdehnung gegen einen Anschlag auftreten würden, vermeidbar ist. Somit ist eine mechanische Beanspruchung eines die Antriebseinheit aufnehmenden Gehäuses durch thermische Spannungen reduzierbar. Somit ist die Lebensdauer des sanitären Einbauteils nochmals steigerbar.

Bei einer Ausgestaltung kann vorgesehen sein, dass sich der Verstellweg zwischen der ersten Stellposition und einer Stell-Endposition erstreckt, wobei die zweite Stellposition zwischen der ersten Stellposition und der Stell-Endposition angeordnet ist. Von Vorteil ist dabei, dass bei einer Bewegung des Stellelements aus der ersten Stellposition in die zweite Stellposition hinter der zweiten Stellposition noch ein Spiel ausgebildet ist, welches eine Bewegung über die zweite Stellposition hinaus erlaubt. Somit ist ein einfaches Mittel bereitgestellt, einen anschlagfreien Verstellweg auszubilden.

Die Ausbildung eines anschlagfreien Verstellwegs ist besonders dann von Vorteil, wenn die Antriebseinheit mit einer thermischen Ausdehnung eines temperatursensitiven Mediums, das keine öder nur eine geringe Eigeneleastizität aufweist, arbeitet. Denn es hat sich herausgestellt, dass die Ausbildung eines Anschlags zur Begrenzung des Verstellweges bei fehlender Eigenelastizität des Antriebselements ein Problem ist: Es besteht die Gefahr, dass das Antriebselement die Begrenzung des Verstellwegs beschädigt oder wegsprengt.

Bei einer Ausgestaltung der Erfindung kann vorgesehen sein, dass das Stellelement eine Kontaktfläche aufweist, welche zum Verschluss der oder einer Durchströmöffnung mit einer Gegenkontaktfläche zusammenwirkt. Von Vorteil ist dabei, dass die Durchströmöffnung auf einfache Weise verschließbar oder freigebbar ist, in Abhängigkeit von der Stellposition des Stellelements. Besonders günstig ist es, wenn die Kontaktfläche mit der Gegenkontaktfläche abdichtend zusammenwirkt.

Bei einer Ausgestaltung der Erfindung kann vorgesehen sein, dass die oder eine Kontaktfläche des Stellelements an der oder einer Gegenkontaktfläche eines Gehäuseteils durch eine Lageveränderung des Stellelements längs des Verstellwegs vorbeibewegbar ist. Somit ist das Stellelement längs des Verstellwegs beidseits einer Stellposition, zum Beispiel beidseits der zweiten Stellposition, in welcher die Kontaktfläche den geringsten Abstand zu der Gegenkontaktfläche einnimmt, bringbar. Bevorzugt ist die Stellposition, in welcher die Kontaktfläche den geringsten Abstand zu der Gegenkontaktfläche aufweist, durch die zweite Stellposition gegeben. Von Vorteil ist dabei, dass der Verstellweg zumindest in der näheren Umgebung der zweiten Stellposition anschlagfrei ausbildbar ist.

Bei einer Ausgestaltung der Erfindung kann vorgesehen sein, dass die oder eine Kontaktfläche längs oder tangential zu dem Verstellweg an dem Stellelement ausgerichtet ist. Von Vorteil ist dabei, dass eine Vorbeibewegung der Kontaktfläche an einer entsprechend, beispielsweise mit parallelem Verlauf, ausgebildeten Gegenkontaktfläche durch eine Lageveränderung des Stellelements längs des Verstellwegs einfach ermöglicht ist.

Hierbei kann die Kontaktfläche koaxial zu der Gegenkontaktfläche ausgerichtet sein, wenn beide Flächen zylinderförmig ausgebildet sind. Diese Ausrichtung erlaubt auf einfache Weise ein anschlagfreies Vorbeibewegen der Kontaktfläche an der Gegenkontaktfläche (oder umgekehrt), wobei die Kontaktfläche mit der Gegenkontaktfläche in der Position größter Annäherung einen nahezu oder vollständig dichten Abschluss bewirken kann.

Besonders günstig ist es, wenn die Kontaktfläche ringförmig oder zylinderförmig ist und wenn die Gegenkontaktfläche entsprechend ringförmig oder zylinderförmig passend ausgebildet ist.

Bei einer Ausgestaltung der Erfindung kann vorgesehen sein, dass das Stellelement zumindest in der ersten Stellposition mit einem Führungselement in die oder eine Durchströmöffnung eingreift. Von Vorteil ist dabei, dass das Stellelement in Bezug auf die Durchströmöffnung in der ersten Stellposition längs des Verstellweges führbar ist. Besonders günstig ist es, wenn das Stellelement in allen Stellpositionen längs des Verstellweges in die oder eine Durchströmöffnung eingreift. Von Vorteil ist dabei, dass eine definierte Bewegung des Stellelements längs des Verstellweges einrichtbar ist.

Bei einer Ausgestaltung der Erfindung kann vorgesehen sein, dass die Funktionseinheit einen mit steigendem Druck zunehmenden Strömungswiderstand im Durchströmungsweg bildet. Von Vorteil ist dabei, dass eine Mengenregelungs- und/oder Mengenbegrenzungsfunktion auf einfache Weise realisierbar ist. Beispielsweise kann dies durch einen lage- und/oder größenveränderlichen Widerstandskörper im Durchströmungsweg, dessen Lage und/oder Größe druckabhängig ist, erreicht sein. Besonders günstig ist es, wenn die Funktionseinheit bei dem in der zweiten Stellposition befindlichem Stellelement einen mit steigendem Druck zunehmenden Strömungswiderstand im Durchströmungsweg bildet. Die Zunahme des Strömungswiderstandes wirkt somit der sonst stattfindenden Erhöhung der Durchflussmenge je Zeiteinheit bei steigendem Druck entgegen, so dass sich insgesamt die gewünschte Mengenregelungsfunktion ergibt. Der Strömungswiderstand kann hierbei proportional zum Druckverlust über der Funktionseinheit sein.

Bei einer Ausgestaltung der Erfindung kann vorgesehen sein, dass die Funktionseinheit einen durchströmten Öffnungsquerschnitt definiert, dessen Querschnittsfläche sich bei einem zunehmenden Druckgefälle selbsttätig über der Funktionseinheit verkleinert. Von Vorteil ist dabei, dass auf einfache Weise ein mit steigendem Druck zunehmender Strömungswiderstand im Durchströmungsweg bildbar und bereitstellbar ist.

Eine besonders einfache Ausgestaltung kann vorsehen, dass der erwähnte Widerstandskörper als O-Ring ausgebildet ist.

Allgemein ist es günstig, wenn die Antriebseinheit in thermischem Kontakt mit dem im Durchströmungsweg strömenden Medium, beispielsweise Wasser, ist. Von Vorteil ist dabei, dass die Temperaturänderung in dem strömenden Medium auf einfach Weise direkt in eine Stellbewegung des Stellelements umsetzbar ist.

Bei einer Ausgestaltung der Erfindung kann vorgesehen sein, dass die Antriebseinheit im Durchströmungsweg umströmbar angeordnet ist. Von Vorteil ist dabei, dass die thermische Anbindung der Antriebseinheit an das strömende Medium besonders effektiv ist.

Bei einer Ausgestaltung der Erfindung kann vorgesehen sein, dass die Antriebseinheit in einer Fließrichtung des Durchströmungsweges hinter der Funktionseinheit angeordnet ist. Von Vorteil ist dabei, dass die Platzverhältnisse in einem sanitären Einbauteil gut ausnutzbar sind. Das Antriebselement kann alternativ auch vor der Funktionseinheit angeordnet sein.

Bei einer Ausgestaltung der Erfindung kann vorgesehen sein, dass die Volumenstromabhängigkeit unterhalb einer Schwellentemperatur eine Drosselfunktion beschreibt. Somit kann ein praktisch unbegrenztes Abfließen von Kaltwasser einrichtbar sein. Unter einer Drosselfunktion wird hierbei eine Funktion verstanden, die eine Volumenstromabhängigkeit definiert, wie sie bei einer Drossel vorliegt. Beispielsweise kann diese dadurch charakterisiert sein, dass zumindest oberhalb eines Anfangsdruckes ein weitgehend druckunabhängiger Strömungswiderstand (genauer ergibt sich der Verlauf einer Wurzelfunktion) vorliegt. Eine Drossel kann durch ein weitgehend proportionales Verhalten von Druckabfall und zugehöriger Durchflussmenge charaktierisiert werden.

Zusätzlich oder alternativ kann vorgesehen sein, dass die - Volumenstromabhängigkeit oberhalb der oder einer Schwellentemperatur eine Mengenbegrenzungsfunktion beschreibt. Unter einer Mengenbegrenzungsfunktion wird hierbei eine Funktion verstanden, die bei einem Mengenbegrenzer vorliegt. Beispielsweise kann diese dadurch charakterisiert sein, dass zumindest oberhalb eines Anfangsdruckes ein mit steigendem Druck zunehmender Strömungswiderstand (erste Ableitung) vorliegt. Bei einer Mengenbegrenzungsfunktion, die eine Begrenzung der Durchflussmenge unter einen Schrankenwert beschreibt, ist die Zunahme des Strömunsgwiderstandes dabei so stark, dass sich der Schrankenwert als waagerechte Asymptote der Mengenregelungsfunktion ergibt.

Diese qualitativen Beschreibungen der Mengenregelungsfunktion gelten in der Regel bis zu einem maximal zulässigen Druck, beispielsweise bis 10 bar oder bis zu einem anderen, bei der Auslegung von sanitären Installationen üblichen maximal zulässigen Druck, oberhalb dessen eine ordungsgemäße Funktion der Funktionseinheit nicht mehr gegeben ist.

Bevorzugt ist die Schwellentemperatur in einem Bereich festgelegt, welcher die Temperatur des Warmwassers von der Temperatur des Kaltwasser trennt, beispielsweise im Bereich zwischen 20°C und 40°C, insbesondere im Bereich zwischen 25°C und 35°, besonders bevorzugt im Bereich zwischen 28°C und 32°C.

Allgemein ist es günstig, wenn das sanitäre Einbauteil als Einsetzkartusche ausgebildet ist. Somit lässt sich das sanitäre Einbauteil vielfältig bei Sanitärarmaturen einsetzten.

Bei einer vorteilhaften Ausgestaltung kann vorgesehen sein, dass das Einbauteil als Strahlregler ausgebildet ist. Somit ist bei einem Strahlregler ein temperaturabhängiges Umschalten der Funktionseinheit zwischen zwei definierten Volumenstromabhängigkeiten einrichtbar.

Bei einer vorteilhaften Ausgestaltung kann vorgesehen sein, dass die das Einbauteil mit einem Gewinde versehen und in ein Aufnahmegehäuse einsetzbar ist. Das Gewinde kann hierbei als Innengewinde und/oder als Außengewinde ausgebildet sein. Das Aufnahmegehäuse kann beispielsweise an einer Sanitärarmatur oder an einem Sanitärschlauch ausgebildet sein.

Bei der Sanitärarmatur der eingangs erwähnten Art sieht eine häufige Verwendung und eine Lösung der genannten Aufgabe erfindungsgemäß vor, dass ein Einbauteil nach einem der Ansprüche 1 bis 13 in dem Wasserzulauf und/oder in dem Wasserauslauf der Sanitärarmatur angeordnet ist.

Von Vorteil ist dabei, dass ein unterschiedliches Durchströmverhalten für in einer Warmwasserleitung befindliches, abgekühltes Wasser und das in der Warmwasserleitung auf Betriebstemperatur befindliche Warmwasser auf einfache Weise erreichbar ist. Die Erfindung erlaubt es somit, den gewünschten Spareffekt für Warmwasser mit einer möglichst geringen Betriebsdauer, bis das Warmwasser an dem Wasserauslauf tatsächlich bereitsteht, zu kombinieren.

Zur Lösung der genannten Aufgabe ist erfindungsgemäß bei einem Verfahren der eingangs genannten Art vorgesehen, dass eine Volumenstromabhängigkeit, welche einen Volumenstrom in Abhängigkeit von einem Druck definiert, in Abhängigkeit von einer Temperatur des strömenden Mediums eingestellt wird, wobei die Volumenstromabhängigkeit bei wenigstens einem Druck des strömenden Mediums zu einer ersten Temperatur eine erste Durchflussmenge und zu einer zweiten Temperatur, die höher als die erste Temperatur ist, eine zweite Durchflussmenge, die geringer als die erste Durchflussmenge ist, definiert. Bevorzugt sind die Durchflussmengen auf eine feste Zeiteinheit bezogen. Von Vorteil ist dabei, dass unerwünschtes, kaltes Wasser schnell abführbar ist, während für energetisch wertvolleres Warmwasser eine Sparfunktion, welche die Durchflussmenge je Zeiteinheit begrenzt oder regelt, realisierbar ist.

Bei einer Ausgestaltung der Erfindung kann vorgesehen sein, dass die Volumenstromabhängigkeit bei oder oberhalb der zweiten Temperatur einen erhöhten Strömungswiderstand eines Durchströmungsweges und/oder eine Begrenzung der Durchflussmenge definiert. Somit ist der Wasserverbrauch für Warmwasser auf einfache Weise reduzierbar.

Bei einer Ausgestaltung der Erfindung kann vorgesehen sein, dass die Volumenstromabhängigkeit bei oder oberhalb der zweiten Temperatur einem mit steigendem Druck zunehmenden Strömungswiderstand des oder eines Durchströmungsweges definiert. Von Vorteil ist dabei, dass eine Mengenbegrenzung oder zumindest eine Reduzierung der Durchflussmenge gegenüber einer Drossel erreichbar ist.

Bei einer Ausgestaltung der Erfindung kann vorgesehen sein, dass unterhalb einer Schwellentemperatur des strömenden Mediums, insbesondere bei der ersten Temperatur, eine Volumenstromabhängigkeit einer Drosselfunktion eingestellt wird und/oder dass oberhalb der oder einer Schwellentemperatur des strömenden Mediums, insbesondere bei der ersten Temperatur, eine Volumenstromabhängigkeit einer Mengenbegrenzungsfunktion eingestellt wird. Bei einer unterhalb einer Schwellentemperatur durchströmenden Mediums eingestellten Volumenstromabhängigkeit einer Drosselfunktion ist beispielsweise abgekühltes Warmwasser schnell abführbar, so dass Warmwasser auf Betriebstemperatur schnell bereitstellbar ist. Wird oberhalb einer Schwellentemperatur des strömenden Mediums eine Volumenstromabhängigkeit einer Mengenbegrenzungsfunktion eingestellt, so ist beispielsweise für Warmwasser eine Wassersparfunktion realisierbar.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehreren Ansprüche untereinander und/oder mit einzelnen oder mehreren Merkmalen der Ausführungsbeispiele.

Es zeigt:
- Fig. 1: eine Schnittdarstellung eines erfindungsgemäßen sanitären Einbauteils, bei welchem das Stellelement in der zweiten Stellposition befindlich ist,
- Fig. 2: das Einbauteil gemäß Figur 1 mit in erster Stellposition befindlichem Stellelement,
- Fig. 3: das Einbauteil gemäß Figur 1 in Explosionsdarstellung,
- Fig. 4: zwei mit dem Einbauteil gemäß Figur 1 realisierbare Volumenstromabhängigkeiten,
- Fig. 5: ein weiteres erfindungsgemäßes Einbauteil mit einer Antriebseinheit mit Material mit Formgedächtnis,
- Fig. 6: das Einbauteil gemäß Figur 5 mit in zweiter Stellposition befindlichem Stellelement,
- Fig. 7: das Einbauteil gemäß Figur 5 in Explosionsdarstellung,
- Fig. 8: eine Schnittdarstellung eines weiteren erfindungsgemäßen Einbauteils mit in Fließrichtung vorgelagerter Antriebseinheit,
- Fig. 9: das Einbauteil gemäß Figur 8 mit in erster Stellposition befindlichem Stellelement,
- Fig. 10: das Einbauteil gemäß Figur 8 in Explosionsdarstellung,
- Fig. 11: eine Schnittdarstellung eines als Strahlregler ausgebildeten, weiteren erfindungsgemäßen Einbauteils,
- Fig. 12: das Einbauteil gemäß Figur 11 mit in der zweiten Stellposition befindlichem Stellelement,
- Fig. 13: das Einbauteil gemäß Figur 11 in Explosionsdarstellung,
- Fig. 14: ein weiteres erfindungsgemäßes Einbauteil, welches als Strahlregler ausgebildet ist, mit einer Antriebseinheit mit einem Material mit Formgedächtnis,
- Fig. 15: das Einbauteil gemäß Figur 14 mit in zweiter Stellposition befindlichem Stellelement,
- Fig. 16: das Einbauteil gemäß Figur 14 in Explosionsdarstellung,
- Fig. 17: ein weiteres erfindungsgemäßes Einbauteil, welches als Strahlregler ausgebildet ist, mit einer Antriebseinheit mit Bimetall-Scheiben,
- Fig. 18: das Einbauteil gemäß Figur 17 mit in zweiter Stellposition befindlichem Stellelement,
- Fig. 19: das Einbauteil gemäß Figur 17 in Explosionsdarstellung,
- Fig. 20: eine Schnittdarstellung eines weiteren erfindungsgemäßen Einbauteils, welches als Strahlregler ausgebildet ist, mit einem als lageveränderliches Wirkelement ausgebildeten Stellelement,
- Fig. 21: das Einbauteil gemäß Figur 20 mit in Wirkposition verfahrenem Stellelement,
- Fig. 22: das Einbauteil gemäß Figur 20 in Explosionsdarstellung,
- Fig. 23: eine erfindungsgemäße Sanitärarmatur in Gebrauchsstellung,
- Fig. 24: eine weitere erfindungsgemäße Verwendung eines erfindungsgemäßen sanitären Einbauteils bei einer Sanitärarmatur,
- Fig. 25: eine teilweise aufgeschnittene Darstellung des rohrförmigen Gehäuses aus Fig. 1,
- Fig. 26: eine weitere erfindungsgemäße Verwendung eines erfindungsgemäßen sanitären Einbauteils bei einer Sanitärarmatur,
- Fig. 27: zwei mit einem erfindungsgemäßen Einbauteil realisierbare Volumenstromabhängigkeiten,
- Fig. 28: ein weiteres erfindungsgemäßes Einbauteil, welches zwei Drosselfunktionen realisiert,
- Fig. 29: das Einbauteil gemäß Figur 28 mit in zweiter Stellposition befindlichem Stellelement,
- Fig. 30: das Einbauteil gemäß Figur 28 in Explosionsdarstellung,
- Fig. 31: die mit dem Einbauteil gemäß Figur 28 realisierbaren Volumenstromabhängigkeiten in qualitativer Prinzipdarstellung,
- Fig. 32: ein weiteres erfindungsgemäßes Einbauteil, welches als Strahlzerleger ausgebildet ist,
- Fig. 33: das Einbauteil gemäß Figur 32 mit in zweiter Stellposition befindlichem Stellelement,
- Fig. 34: das Einbauteil gemäß Figur 32 in Explosionsdarstellung,
- Fig. 35: ein weiteres erfindungsgemäßes Einbauteil, welches als kombinierter Mengenregler und Strahlzerleger ausgebildet ist,
- Fig. 36: das Einbauteil gemäß Figur 35 mit in zweiter Stellposition befindlichem Stellelement und
- Fig. 37: das Einbauteil gemäß Figur 35 in Explosionsdarstellung.

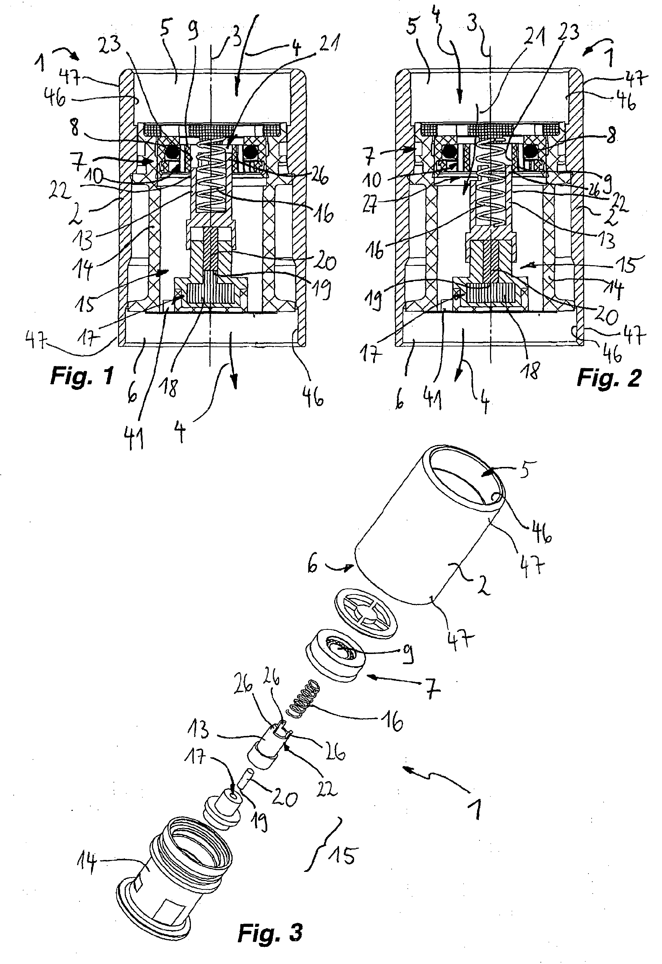

Figur 1 zeigt in einer axialen Schnittdarstellung ein im Ganzen mit 1 bezeichnetes, erfindungsgemäßes sanitäres Einbauteil.

Das Einbauteil 1 ist mit einer rohrförmigen Einbauhülse 2 als Kartusche, insbesondere Einsetzkartusche, ausgebildet.

Eine Achse 3 der im Beispiel zylindrischen Einbauhülse 2 definiert einen Durchströmungsweg 4, dessen Fließrichtung in Figur 1 von oben nach unten zwischen einem Einlass 5 und einem Auslass 6 verläuft.

Zwischen dem Einlass 5 und dem Auslass 6 ist im Durchströmungsweg 4 eine Funktionseinheit 7 ausgebildet, welche in an sich bekannter Weise mit einem Widerstandskörper 8 - einem O-Ring - eine Volumenstromabhängigkeit einer Mengenregelungsfunktion realisiert. Hierbei wird der Widerstandskörper 8 je nach an dem Einlass 5 anliegenden Druck oder je nach zwischen dem Einlass 5 und dem Auslass 6 über der Funktionseinheit 7 abfallendem Druck unterschiedlich stark gegen ein Aufnahmeteil 9 gedrückt, um einen Öffnungsquerschnitt 10 mit druckabhängiger Querschnittsfläche zu bilden.

Auf diese Weise wird erreicht, dass ein hoher Druck am Einlass 5 beziehungsweise eine große Druckdifferenz zwischen dem Einlass 5 und dem Auslass 6 zu einer kleinen Querschnittsfläche des Öffnungsquerschnitts 10 führt und umgekehrt ein kleiner Druck zu einer großen Querschnittsfläche.

Somit wirkt die Funktionseinheit 7 der natürlichen Vergrößerung der Durchflussmenge je Zeiteinheit bei steigendem Druck dadurch entgegen, dass die Querschnittsfläche des Öffnungsquerschnitts 10 selbsttätig verkleinert wird. Bei anderen Ausführungsbeispielen ist statt des O-Rings ein anderer elastischer Formkörper vorhanden, um eine druckabhängige Querschnittsfläche zu bilden.

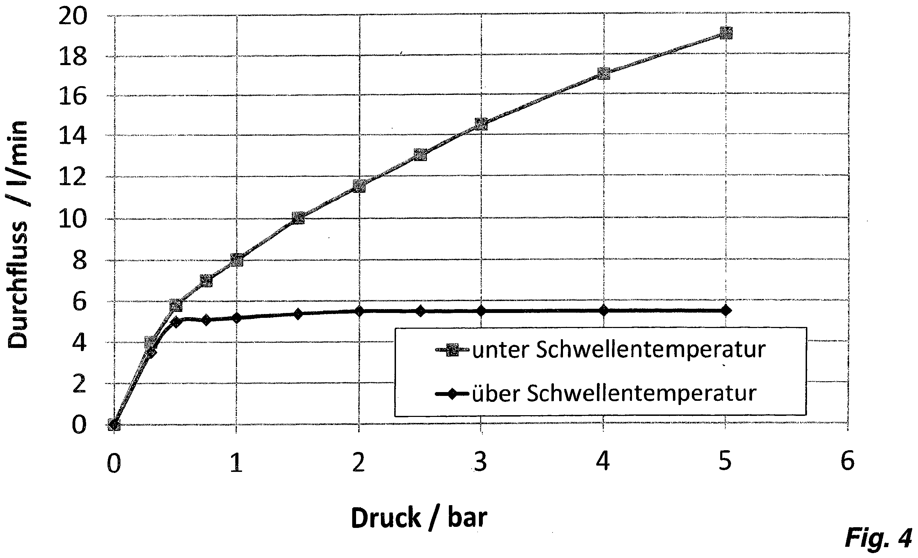

Es ergibt sich somit eine Volumenstromabhängigkeit, die in Grundzügen oder qualitativ in der Abbildung gemäß Figur 4 dargestellt ist. Die dort angegebenen Zahlenwerte sind lediglich zur Illustration hinzugefügt und können bei weiteren Ausführungsbeispielen deutlich von den angegebenen Zahlenwerten abweichen.

Das Einbauteil 1 gemäß Figur 1 realisiert nach der beschriebenen Weise eine Volumenstromabhängigkeit 11 durch die Kurve zu einer Temperatur, die unterhalb von einem (unteren) Temperaturschwellwert (Threshold) liegt (vgl. Figur 4). Es ist ersichtlich, dass die Durchflussmenge (je Zeiteinheit) für Drücke oberhalb von 1 bar nahezu konstant und begrenzt ist. Die Volumenstromabhängigkeit 11 beschreibt somit eine Mengenbegrenzungsfunktion, bei welcher der Strömungswiderstand zumindest oberhalb eines Anfangdruckes von ca. 1 bar mit steigendem Druck zunimmt. Die asymptotische, waagerechte Gerade, welche die Begrenzung auf Werte unterhalb eines Schrankenwertes von sechs Liter pro Minute beschreibt, definiert einen Parameter der realisierten Volumenstromabhängigkeit.

Wird dieser Parameter verändert, so ergibt sich beispielsweise eine Volumenstromabhängigkeit 12 in Figur 4. Bei dieser Volumenstromabhängigkeit 12 ist der asymptotische Verlauf, das heißt der Verlauf für große Drücke (hier oberhalb eines Anfangsdruckes von ca. 1 bar), nicht mehr durch eine waagerechte Gerade, sondern durch eine näherungsweise linear, genauer als Wurzelfunktion, ansteigende Gerade gegeben. Diese ansteigende Gerade beschreibt einen nahezu oder exakt druckunabhängigen Strömungswiderstand, beispielsweise einer Drossel. Die Volumenstromabhängigkeit 12 beschreibt somit qualitativ eine Drosselfunktion. Die Mengenbegrenzung der Volumenstromabhängigkeit 11 ist deaktiviert.

Die Funktionseinheit 7 in Figur 1 weist ein Stellelement 13 auf, welches relativ zu einem Gehäuse 14 und/oder zu dem Widerstandskörper 8 beweglich oder lageveränderbar angeordnet ist.

Das Stellelement 13 kann somit entlang eines linearen Verstellweges, welcher parallel zu der Achse 3 ausgerichtet ist, zwischen der in Figur 2 gezeigten ersten Stellposition des Stellelements 13 und der in Figur 1 gezeigten zweiten Stellposition des Stellelements 13 verstellt beziehungsweise bewegt werden.

In der ersten Stellposition des Stellelements 13 gemäß Figur 2 realisiert das Einbauteil 1 die Volumenstromabhängigkeit 12 in Figur 4.

In der zweiten Stellposition gemäß Figur 1 des Stellelements 13 realisiert das Einbauteil 1 die Volumenstromabhängigkeit 11 in Figur 4.

Zum Wechseln zwischen den Stellpositionen in Figur 1 und Figur 2 ist in dem Einbauteil 1 eine Antriebseinheit 15 ausgebildet.

Die Antriebseinheit 15 ist temperatursensitiv und beaufschlagt das Stellelement 13 gemäß seiner Eigentemperatur.

Figur 1 zeigt die Antriebseinheit 15 mit einer höheren Eigentemperatur als in Figur 2.

Zur Rückführung des Stellelements 13 in die erste Stellposition bei einer Abkühlung von der Situation gemäß Figur 1 in die Situation gemäß Figur 2, also unter einen Schwellenwert, ist eine Rückstellfeder 16 vorgesehen. Wasserdruck, der auf Wirkflächen wirkt, kann hierbei die Rückführung des Stellelements 13 unterstützen.

Die Stellung gemäß Figur 2 wird unterhalb eines unteren Temperaturschwellwertes T< eingenommen, die Stellung gemäß Figur 1 wird oberhalb eines oberen Temperaturschwellwertes T_{>} eingenommen. Unterer Temperaturschwellwert T_{<} und oberer Temperaturschwellwert T_{>} können nahe beeinander liegen oder sogar identisch sein. Die Temperaturschwellwerte T_{<}, T_{>} können den Temperaturbereich für Kaltwasser von dem Temperturbereich für Warmwasser trennen. Die Temperaturschwellwerte T_{<}, T_{>} können so dicht beeinander liegen, dass sich der Übergang von der Volumenstromabhängigkeit 12 zu der Volumenstromabhängigkeit 11 bei einer Erwärmung des durchströmenden Mediums schlagartig vollzieht (und umgekehrt bei einer Abkühlung).

Somit ist insgesamt erreicht, dass das Stellelement 13 bei einer höheren Temperatur der Antriebseinheit 15 in der zweiten Stellposition gemäß Figur 1 ist, während das Stellelement 13 bei einer geringeren Temperatur der Antriebseinheit 15 in der ersten Stellposition gemäß Figur 2 ist.

Die für eine Lageveränderung erforderliche Stellbewegung ergibt sich daraus, dass die Antriebseinheit 15 längs der Achse 3 eine temperaturabhängige Ausdehnung aufweist.

Hierzu ist eine im Inneren der Antriebseinheit 15 ausgebildete Aufnahmekammer 17 mit einem temperatursensitiven Medium 18, beispielsweise Thermowachs, befüllt.

Das Medium 18 hat die Eigenschaft, dass es bei einer Temperatur, die zwischen dem unteren Temperaturschwellwert T_{<} und dem oberen Temperaturschwellwert T_{>} liegt (bzw. bei dem Temperaturschwellwert, wenn der untere Temperaturschwellwert und der obere Temperaturschwellwert zusammenfallen) eine Phasenumwandlung durchläuft und sich schlagartig ausdehnt.
Somit dehnt sich das temperatursensitive Medium 18 bei Erwärmung der Antriebseinheit 15 aus und beaufschlagt eine bewegliche Kammerwand 19 eines Kolbens 20. Der Kolben 20 wird somit aus der Aufnahmekammer 17 bei einer Erwärmung des Mediums 18 herausgeschoben.

Der Kolben 20 steht mit dem Stellelement 13 in Wirkverbindung und beaufschlagt dieses, so dass das Stellelement 13 bei einer Erwärmung der Antriebseinheit 15 über einen Schwellenwert von der ersten Stellposition gemäß Figur 2 entlang einer geradlinigen Verstellbewegung in die zweite Stellposition gemäß Figur 1 überführt wird. Die Lageveränderung des Stellelementes längs des Verstellweges wird hier durch eine translatorische Bewegung erreicht, - jedoch ist es mit einer anderen geeigneten Antriebseinheit, die aus einem Formgedächtnis-Material bestehen oder aus Bimetall hergestellt sein kann, auch möglich, die Lageveränderung des Stellelementes längs des Verstellweges durch eine rotatorische Bewegung zu bewirken.

Wie bereits erwähnt, führt die Rückstellfeder 16 nach einer Abkühlung der Antriebseinheit 15 das Stellelement 13 wieder zurück in die erste Stellposition gemäß Figur 2.

In der Funktionseinheit 7 ist eine Durchströmungsöffnung 21 ausgebildet, welche in Figur 2 geöffnet ist und welche einen Bypass zu dem Öffnungsquerschnitt 10 darstellt.

In Figur 1 ist diese Durchströmöffnung 21 durch das in der zweiten Stellposition befindliche Stellelement 13 verschlossen.

Diese Durchtrittsöffnung 21 erklärt die unterschiedlichen Volumenstromabhängigkeiten 11, 12 gemäß Figur 4.

Die erhöhte Durchflussmenge der Volumenstromabhängigkeit 12 ergibt sich dadurch, dass zusätzlich Wasser durch die geöffnete Durchströmöffnung 21 strömt.

In der ersten Stellposition verschließt das Stellelement 13 dagegen die Durchströmöffnung 21, so dass das Wasser ausschließlich an dem Widerstandskörper 8 vorbeiströmen muß, wodurch sich die Volumenstromabhängigkeit 11 ergibt.

Aus Figur 1 ist ersichtlich, dass das Stellelement 13 bei einer weiteren thermischen Ausdehnung des temperatursensitiven Mediums 18 über die in Figur 1 gezeigte zweite Stellposition hinaus in die verschlossene Durchströmöffnung 21 hineinbewegbar ist.

Der Verstellweg des Stellelements 13 ist somit zumindest an seinem der zweiten Stellposition (Figur 1) näheren Wegende anschlagfrei eingerichtet, und das Stellelement 13 ist über die zweite Stellposition hinaus in eine Stell-Endposition verstellbar, wenn sich das Medium 18 weiter ausdehnt.

Zur Abdichtung der Durchströmöffnung 21 in der zweiten Stellposition weist das Stellelement 13 eine Kontaktfläche 22 auf. Die Kontaktfläche 22 ist zylinderförmig ausgebildet und verläuft als Außenzylinder um die Achse 3.

Diese Kontaktfläche 22 wirkt mit einer stationären Gegenkontaktfläche 23 zusammen. Die Gegenkontaktfläche 23 ist als Innenzylinder ausgebildet, wobei der Durchmesser der Gegenkontaktfläche 23 auf den Außendurchmesser der Kontaktfläche 22 derart abgestimmt ist, dass sich in der zweiten Stellposition ein dichter oder ein nahezu dichter Abschluss der Durchströmöffnung 21 ergibt. Dieser dichte Abschluss kann bei einem Ausführungsbeispiel durch einen zusätzlichen O-Ring (nicht gezeigt) hergestellt sein. Dies erhöht allerdings die Reibung des Stellelements und den Fertigungsaufwand.

Aus Figur 1 ist ersichtlich, dass sich die Kontaktfläche 22, welche die Abdichtung in der zweiten Stellposition bewirkt, an der Gegenkontaktfläche 23, welche mit dieser Kontaktfläche 22 zur Abdichtung zusammenwirkt, vorbeibewegen lässt, wenn das Stellelement 13 in die Stell-Endposition lageverstellt wird.

In den Figuren 1 und 2 ist weiter ersichtlich, dass der Verstellweg des Stellelements 13 geradlinig ausgebildet ist. Der Verstellweg ist in Fließrichtung ausgerichtet.

Bei weiteren Ausführungsbeispielen sind auch gekrümmte oder kurvenförmige Verstellwege eingerichtet, beispielsweise bei welchen das Stellelement 13 verschwenkt oder gedreht wird. Der Verstellweg kann auch transversal, insbesondere senkrecht, zu der Fließrichtung ausgerichtet sein.

In Figur 1 und 2 ist noch ersichtlich, dass die Kontaktfläche 22 längs oder tangential zu dem Verstellweg des Stellelements 13 ausgerichtet ist, um ein Vorbeibewegen der Kontaktfläche 22 an der Gegenkontaktfläche 23 zu ermöglichen. Die Gegenkontaktfläche 23 ist somit ebenfalls längs oder tangential zu dem Verstellweg ausgerichtet.

Bei dem Ausführungsbeispiel gemäß Figur 1 und Figur 2 bedeutet dies, dass die Achse 3, welche den Verstellweg des Stellelements 13 beschreibt, gleichzeitig die Achse der einen Außenzylinder bildenden Kontaktfläche 22 und der einen Innenzylinder bildenden Gegenkontaktfläche 23 darstellt. Die Kontaktfläche 22 und die Gegenkontaktfläche 23 sind somit zueinander koaxial ausgerichtet, wobei der Verstellweg längs einer Achse verläuft, bezüglich der die koaxiale Ausrichtung definiert ist.

Die Antriebseinheit 15 ist in dem Durchströmungsweg 4 von dem strömenden Medium umströmbar angeordnet, um eine möglichst gute thermische Anbindung der Antriebseinheit 15 und somit des temperatursensitiven Mediums 18 an das strömende Medium zu ermöglichen.

In der Fließrichtung des strömenden Mediums von dem Einlass 5 zu dem Auslass 6 ist in dem gezeigten Ausführungsbeispiel die Antriebseinheit 15 hinter der Funktionseinheit 7, also strömungsabseitig angeordnet.

Der stationäre Teil der Aufnahmekammer 17 ist hierbei an dem Gehäuse 14 festgelegt.

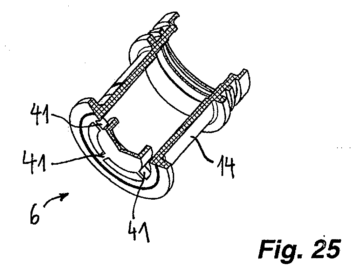

Die Antriebseinheit 15 ruht hierbei auf Stegen 41. Die Stege 41 sind innenseitig an dem Gehäuse 14 angeformt und bilden ein Widerlager für die Expansionskraft des temperatursensitiven Mediums 18 (vgl. Fig. 25).

Das Auslasssieb 24 ist ebenfalls mit dem Gehäuse 14 verbunden.

In Gebrauch des sanitären Einbauteiles 1 wird somit das Stellelement 13 je nach Temperatur des strömenden Mediums im Durchströmungsweg 4 zwischen der ersten Stellposition gemäß Figur 2 und der zweiten Stellposition gemäß Figur 1 und gegebenenfalls darüber hinaus in eine End-Stellposition verfahren oder verstellt. Somit wird erreicht, dass bei Warmwasser als strömendes Medium die Volumenstromabhängigkeit 11 gemäß Figur 4 und bei Kaltwasser als strömendem Medium die Volumenstromabhängigkeit 12 gemäß Figur 4 eingestellt ist.

Aus Figur 4 ist ersichtlich, dass die Volumenstromabhängigkeit 12 bei wenigstens einem Druck, nämlich zumindest bei Drücken oberhalb von 1 bar, bei welchen die Mengenregelungsfunktion zuverlässig regelt, bei der ersten Temperatur unterhalb eines Temperaturbereichs eine Durchflussmenge definiert, die größer ist als die entsprechende Durchflussmenge der Volumenstromabhängigkeit 11 zu der zweiten Temperatur oberhalb des Temperaturbereichs.

Die Volumenstromabhängigkeit 11 definiert somit zumindest bei dem oberen Temperaturschwellwert und im Ausführungsbeispiel auch bei höheren Temperaturen einen erhöhten Strömungswiderstand des Durchströmungsweges 4, aus welchem eine Begrenzung der Durchflussmenge resultiert. Bei weiteren Ausführungsbeispielen sind Mengenregelungsfunktionen zu anderen Temperaturen realisiert.

In Figur 3 sind drei Führungselemente 26 ausgebildet, welche zur Führung der Verstellbewegung des Stellelements 13 in allen Stellpositionen des Stellelements 13 in die Durchströmöffnung 21 eingreifen. Bei weiteren Ausführungsbeispielen sind andere Anzahlen und/oder Formen von Führungselementen ausgebildet.

Zwischen den Führungselementen 26 sind Durchtrittsöffnungen 27 ausgebildet, um ein Durchströmen des strömenden Mediums durch die Durchströmöffnung 21 in der ersten Stellposition des Stellelements 13 gemäß Figur 2 zu ermöglichen.

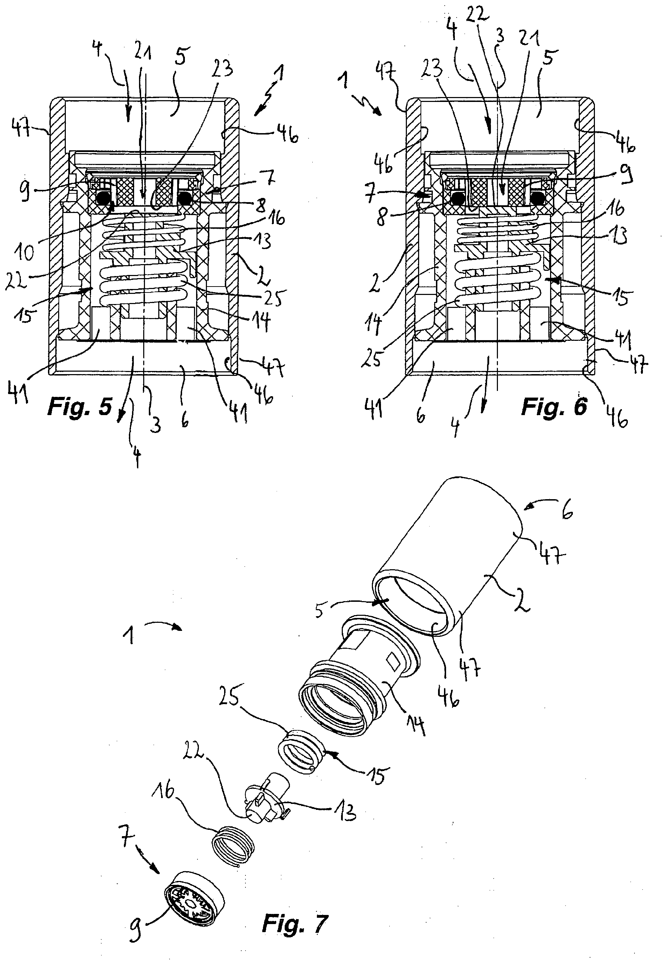

Die Figuren 5 bis 7 zeigen ein weiteres Ausführungsbeispiel eines erfindungsgemäßen sanitären Einbauteils 1. Hierbei sind funktionell und/oder konstruktiv zu dem Ausführungsbeispiel gemäß den Figuren 1 bis 4 gleichartige oder ähnliche Bauteile mit denselben Bezugszeichen bezeichnet und nicht noch einmal gesondert beschrieben. Die Ausführungen zu den Figuren 1 bis 4 gelten somit zu den Figuren 5 bis 7 entsprechend.

Im Unterschied zu dem Ausführungsbeispiel gemäß den Figuren 1 bis 4 weist die Antriebseinheit 15 bei dem Ausführungsbeispiel gemäß Figur 5 bis 7 ein spiralförmig gewundenes Antriebselement 25 aus einem Material mit Formgedächtnis auf.

Das Antriebselement 25 ist hierbei so ausgebildet, dass es bei Kontakt mit Kaltwasser im Durchströmungsweg 4 die Ausdehnung längs der Achse 3 gemäß Figur 5 einnimmt, während es seine Ausdehnung in der Dimension längs der Achse 3 bei Kontakt mit Warmwasser oberhalb einer Schwellentemperatur gemäß der Darstellung in Figur 6 vergrößert.

Figur 5 zeigt somit die erste Stellposition, in welcher die Durchströmöffnung 21 als Bypass der Funktionseinheit 7 geöffnet ist, während Figur 6 die zweite Stellposition des Stellelements 13 zeigt, in welcher die Durchströmöffnung 21 verschlossen ist.

In der Stellposition gemäß Figur 5 definiert die Funktionseinheit 7 somit eine Volumenstromabhängigkeit 12 gemäß Figur 4, während die Funktionseinheit 7 in der Figur 6 eine Volumenstromabhängigkeit 11 gemäß Figur 4 definiert. Deutlich ist der Beitrag der als Drossel wirkenden Durchströmöffnung 21 in der Volumenstromabhängigkeit 12 erkennbar.

Die Rückstellfeder 16 unterstützt die Rückholbewegung der Antriebseinheit 15 bei Abkühlung des strömenden Mediums, um das Stellelement 13 in die erste Stellposition zurückzuführen.

Die Kraft, welche durch das Antriebselement 25 insgesamt aufbringbar ist, ist geringer als im Fall des temperatursensitiven Mediums 18 in den Figuren 1 bis 3 aufgrund der Eigenelastizität des Formgedächtnismaterials und der Ausgestaltung des Antriebselements 25 als Feder.

Daher ist es bei dem Ausführungsbeispiel gemäß Figur 5 bis Figur 7 möglich, die Kontaktfläche 22 nicht als Außenzylinder, sondern als oder an der Stirnseite des Stellelements 13 auszubilden.

Die korrespondierende Gegenkontaktfläche 23 ist somit als axial ausgerichteter Ring ausgebildet und bildet einen Anschlag für das Stellelement 13 in der zweiten Stellposition.

Bei einer entsprechenden Ausbildung der Kontaktfläche 22 und der Gegenkontaktfläche 23 in den Figuren 1 bis 3 bestünde dagegen die Gefahr, dass das unkontrolliert expandierende, temperatursensitive Medium 18 das sanitäre Einbauteil 1 zerstört.

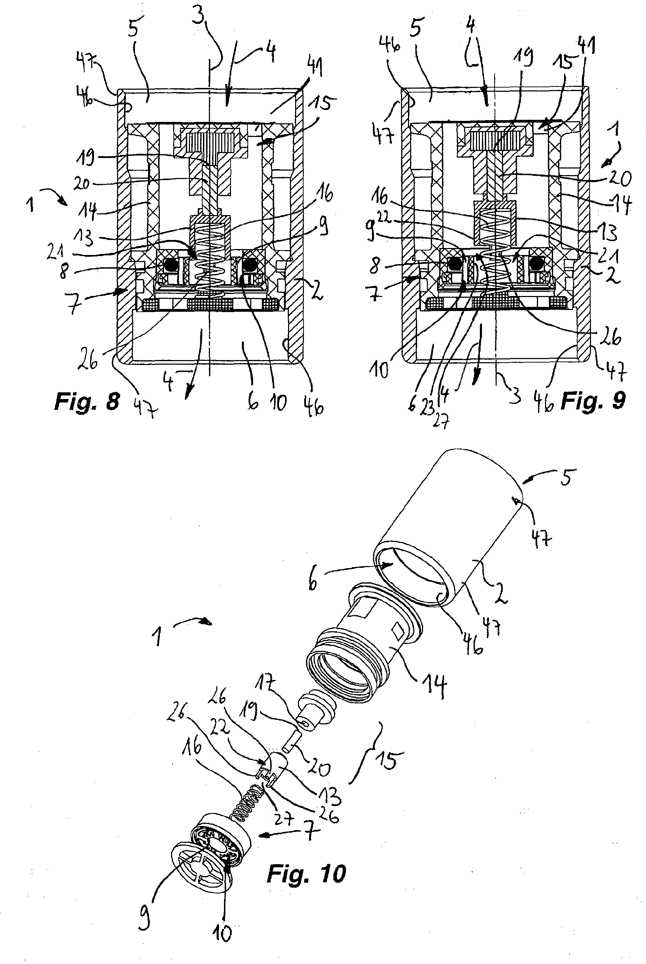

Figur 8 bis 10 zeigen ein weiteres erfindungsgemäßes Ausführungsbeispiel eines sanitären Einbauteils 1. Bei dem Einbauteil 1 sind wieder funktionell und/oder konstruktiv zu den Ausführungsbeispielen gemäß Figur 1 bis 7 gleichartige und/oder ähnliche Bauteile und Funktionseinheiten mit denselben Bezugszeichen bezeichnet und nicht noch einmal gesondert beschrieben. Die Ausführungen zu den Figuren 1 bis 7 gelten somit zu den Figuren 8 bis 10 entsprechend.

Im Unterschied zu den Figuren 1 bis 7 ist bei dem Ausführungsbeispiel gemäß Figur 8 bis 10 die Antriebseinheit 15 nicht abströmseitig, sondern zuströmseitig in Fließrichtung vor der Funktionseinheit 7 angeordnet. Die Antriebseinheit 15 ist somit an Stegen 41 befestigt. Figur 9 zeigt somit das Stellelement 13 in der ersten Stellposition, Figur 8 in der zweiten Stellposition.

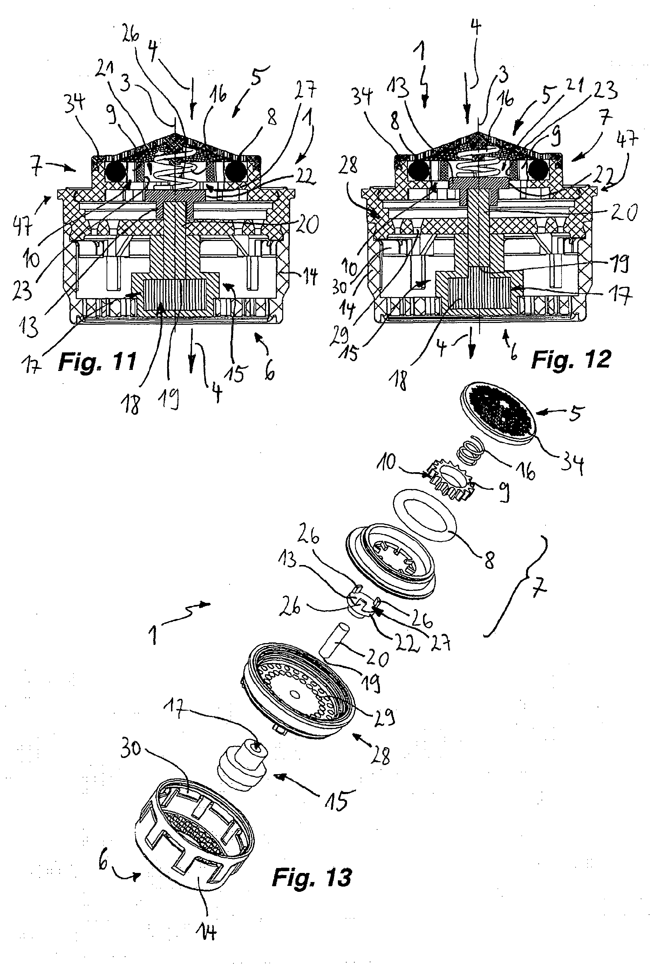

Figur 11 bis 13 zeigt ein weiteres Ausführungsbeispiel eines erfindungsgemäßen sanitären Einbauteils 1, bei welchem wieder funktionell und/oder konstruktiv zu den Ausführungsbeispielen gemäß Figur 1 bis 10 gleichartige und/oder ähnliche Bauteile und Funktionseinheiten mit denselben Bezugszeichen bezeichnet und nicht noch einmal gesondert beschrieben sind.

Das Ausführungsbeispiel gemäß Figur 11 bis Figur 13 weist zusätzlich eine Strahlzerlegungseinheit 28 auf, welche in Fließrichtung der Funktionseinheit 7 nachgeordnet ist.

Die Strahlzerlegungseinheit 28 hat eine Vielzahl von Düsen 29 und Lufteinlässen 30 zur Beimischung von Luft zum strömenden Medium.

Das sanitäre Einbauteil 1 ist somit als Strahlzerleger mit Mengenregelungsfunktion ausgebildet.

Im Übrigen ist die Antriebseinheit 15 analog zu dem Ausführungsbeispiel in den Figuren 1 bis 4 ausgebildet.

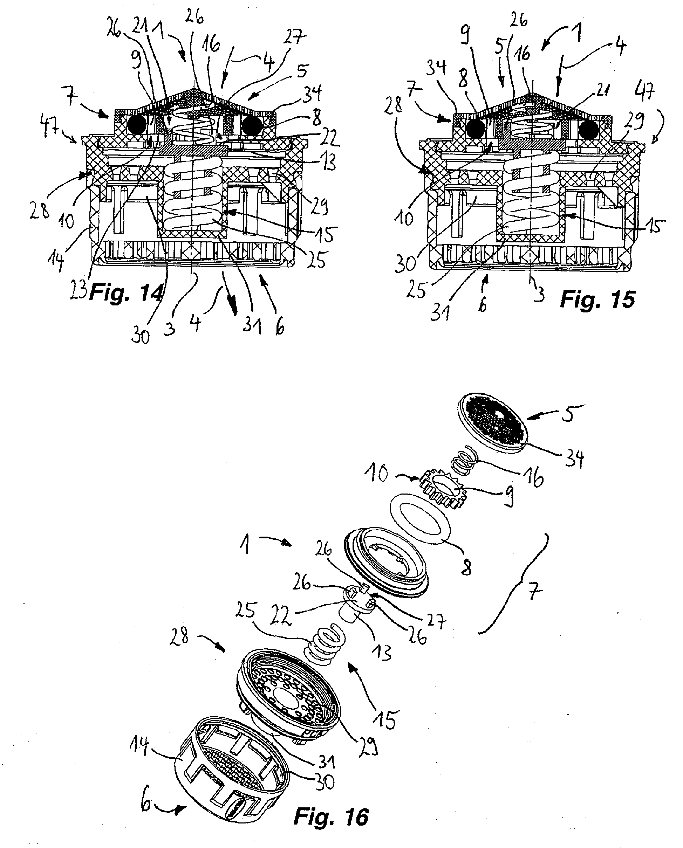

Bei dem Ausführungsbeispiel gemäß Figur 14 bis 16 sind wieder zu den vorbeschriebenen Ausführungsbeispielen funktionell und/oder konstruktiv gleichartige und/oder ähnliche Bauteile und Funktionseinheiten mit denselben Bezugszeichen bezeichnet und nicht noch einmal gesondert beschrieben. Die Ausführungen zu den Ausführungsbeispielen gemäß den Figuren 1 bis 13 gelten somit hier entsprechend.

Auch in dem Ausführungsbeispiel gemäß Figur 14 bis 16 ist das sanitäre Einbauteil 1 als Strahlregler mit Mengenregelungsfunktion ausgebildet und weist eine bereits beschriebene Strahlzerlegungseinheit 28 auf.

Das Wirkprinzip der Antriebseinheit 15 ist hierbei analog zu dem Ausführungsbeispiel gemäß den Figuren 5 bis 7.

Hierbei kann ein das Antriebselement 25 aufnehmender Rahmen 31 für das strömende Medium durchlässig ausgebildet sein. Somit kann das Antriebselement 25 direkt umströmt werden. Ist dagegen der Rahmen 31 undurchlässig ausgebildet, so wird das Antriebselement 25 in der Antriebseinheit 15 indirekt umströmt.

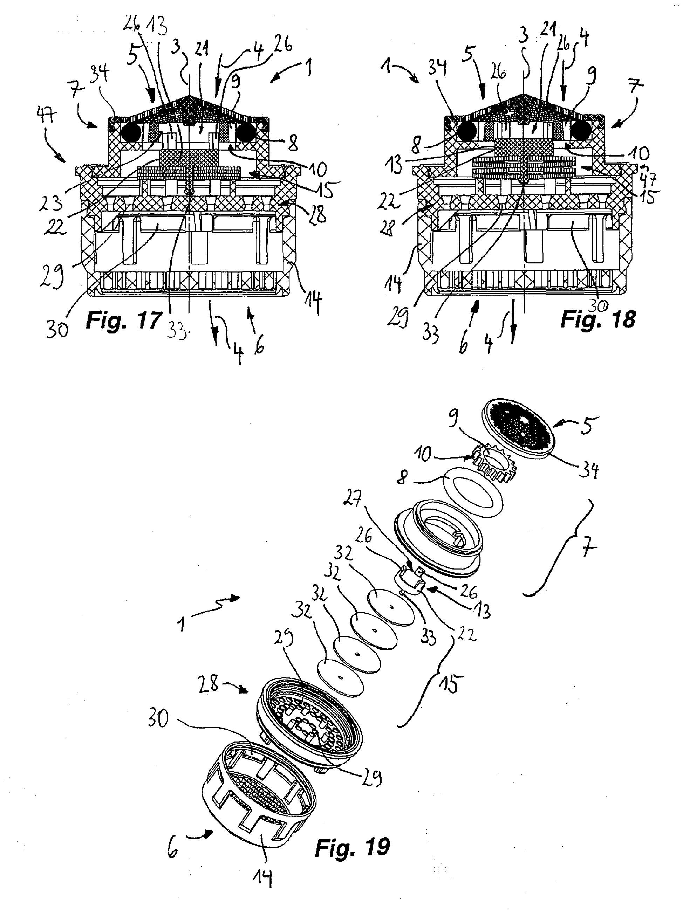

Die Figuren 17 bis 19 zeigen ein weiteres erfindungsgemäßes Ausführungsbeispiel eines sanitären Einbauteiles 1. Funktionell und/oder konstruktiv zu den Ausführungsbeispielen gemäß den Figuren 1 bis 16 gleichartige und/oder ähnliche Bauteile und Funktionseinheiten sind wieder mit denselben Bezugszeichen bezeichnet und nicht noch einmal gesondert beschrieben. Die Ausführungen zu den Figuren 1 bis 16 gelten somit zu den Figuren 17 bis 19 entsprechend.

Bei dem Ausführungsbeispiel gemäß Figur 17 bis 19 weist die Antriebseinheit 15 vier Bimetall-Scheiben 32 auf. Diese Bimetall-Scheiben 32 verändern ihre Form in an sich bekannter Weise je nach Eigentemperatur.

Figur 18 zeigt die zweite Stellposition des Stellelements 13, bei welcher die Bimetall-Scheiben 32 auf Warmwasser-Temperatur sind.

Figur 17 zeigt dagegen die erste Stellposition des Stellelements 13, bei welcher die Bimetall-Scheiben 32 auf Kaltwasser-Temperatur abgekühlt sind.

Um einen ausreichenden Stellweg zwischen der ersten Stellposition und der zweiten Stellposition zu schaffen, sind die Bimetall-Scheiben 32 aufeinander gestapelt, um die jeweilige temperaturinduzierte Ausdehnung der einzelnen Bimetall-Scheiben 32 zu addieren.

Im Ausführungsbeispiel sind vier Bimetall-Scheiben 32 aufeinander gestapelt und auf einen Führungszapfen 33 gesteckt. Es sind auch andere Anzahlen von Bimetall-Scheiben und/oder andere Formen von Bimetall-Elementen verwendbar.

Somit wird das Stellelement 13 durch die Bimetall-Scheiben 32 beaufschlagt, um die Verstellbewegung zur Lageveränderung zu bewegen.

Das Antriebsprinzip der Antriebseinheit 15 gemäß Fig. 17-19 ist bei weiteren Ausführungsbeispielen auch mit einem der Ausführungsbeispiele gemäß den Figuren 1 bis 10, welche keine Strahlzerlegungseinheit 28 aufweisen, kombinierbar.

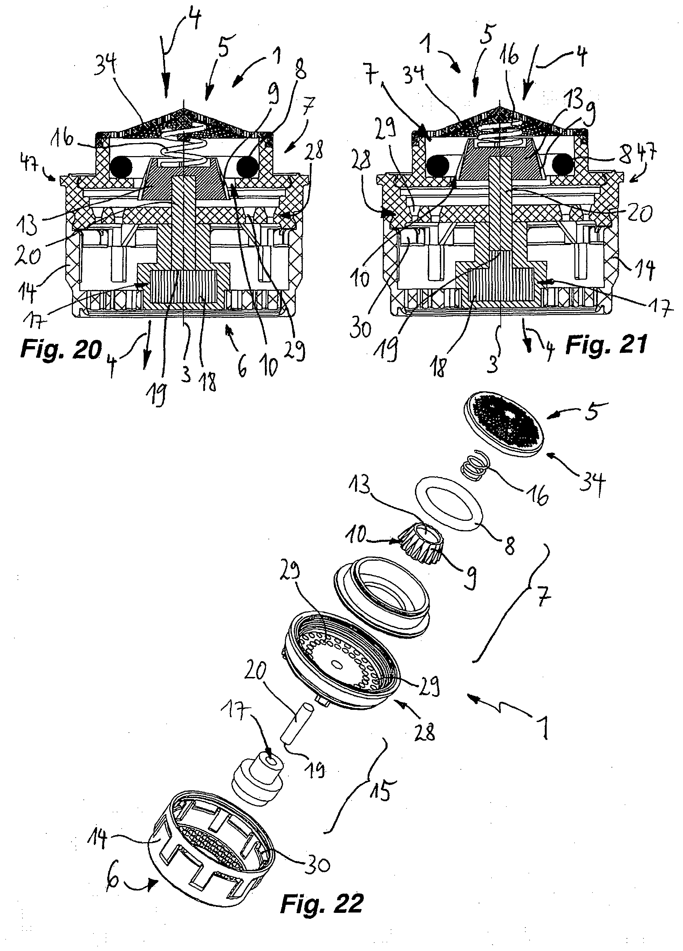

Die Figuren 20 bis 22 zeigen ein weiteres erfindungsgemäßes Ausführungsbeispiel eines sanitären Einbauteils, bei welchem wieder konstruktiv und/oder funktionell zu den Ausführungsbeispielen gemäß Figur 1 bis 19 gleichartige und/oder ähnliche Bauteile und Funktionseinheiten mit denselben Bezugszeichen bezeichnet und nicht noch einmal gesondert beschrieben sind. Die Ausführungen zu den Figuren 1 bis 19 gelten somit bei den Figuren 20 bis 22 entsprechend.

Bei dem Ausführungsbeispiel gemäß Figur 20 bis 22 sind das Aufnahmeteil 9 des Widerstandskörpers 8 und das Stellelement 13 an einem gemeinsamen Bauteil ausgebildet und somit einstückig verbunden.

Figur 20 zeigt das Stellelement 13 in der ersten Stellposition, also bei Kaltwasser-Temperatur, in welcher das Aufnahmeteil 9 von dem Widerstandskörper 8 derart entfernt ist, dass die definierte Volumenstromabhängigkeit der Mengenregelungsfunktion vergleichbar ist mit der Volumenstromabhängigkeit 11, jedoch auf einem höheren Durchflussniveau.

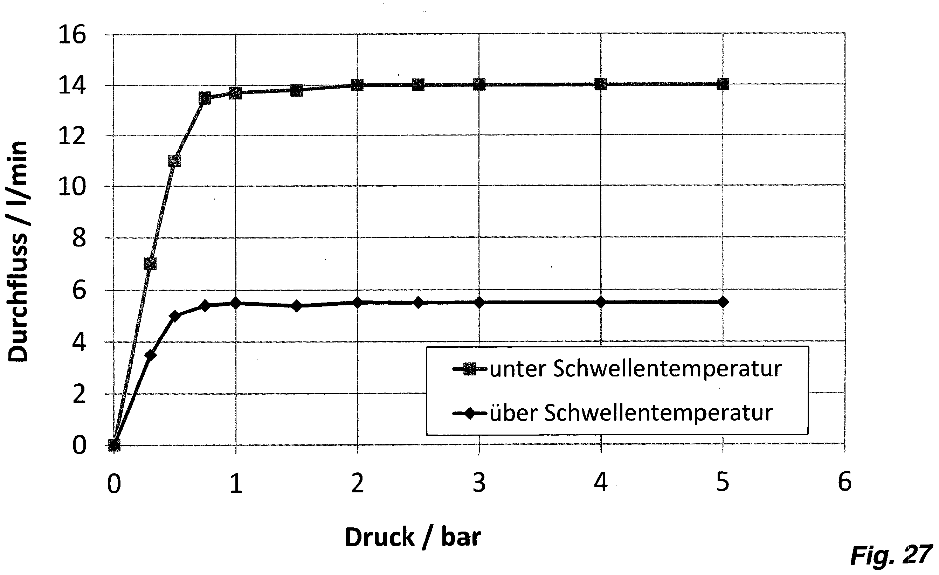

Der Öffnungsquerschnitt 10 wirkt somit stets, also unterhalb und oberhalb des Schwellentemperatur, als Mengenregler mit einem typischen Verlauf wie die Volumenstromabhängigkeit 11 in Fig. 4. Diesen Fall zeigt Fig. 27: Unterhalb einer Schwellentemperatur (oder eines Schwellentemperaturbereichs, falls ein Hystereverhalten realisiert ist) definiert die Funktionseinheit 7 eine Volumenstromabhängigkeit 45, oberhalb der Schwellentemperatur definiert die Funktionseinheit 7 eine Volumenstromabhängigkeit 11, die zu einem niedrigeren Grenzwert für die maximale Durchflussmenge gehört.

Bei der Zuführung von Warmwasser in den Durchströmungsweg 4 erwärmt sich das temperatursensitive Medium 18 in der bereits beschriebenen Weise und führt das Stellelement 13 in die in Figur 21 gezeigte zweite Stellposition.

In dieser zweiten Stellposition ist das Aufnahmeteil 9 derart an den Widerstandskörper 8 herangeführt, dass das Aufnahmeteil 9 aktiv ist zur Realisierung der Volumenstromabhängigkeit 11 gemäß Figur 27.

Es sei noch erwähnt, dass sich die Rückstellfeder 16 bei den Ausführungsbeispielen gemäß Figur 11 bis 22 an einem Vorsatzsieb 34 des als Strahlregler ausgebildeten Einbauteils 1 abstützt. Bei den Ausführungsbeispielen gemäß Figur 1 bis 10 stützt sich die Rückstellfeder 16 dagegen abströmseitig an der Funktionseinheit 7 ab.

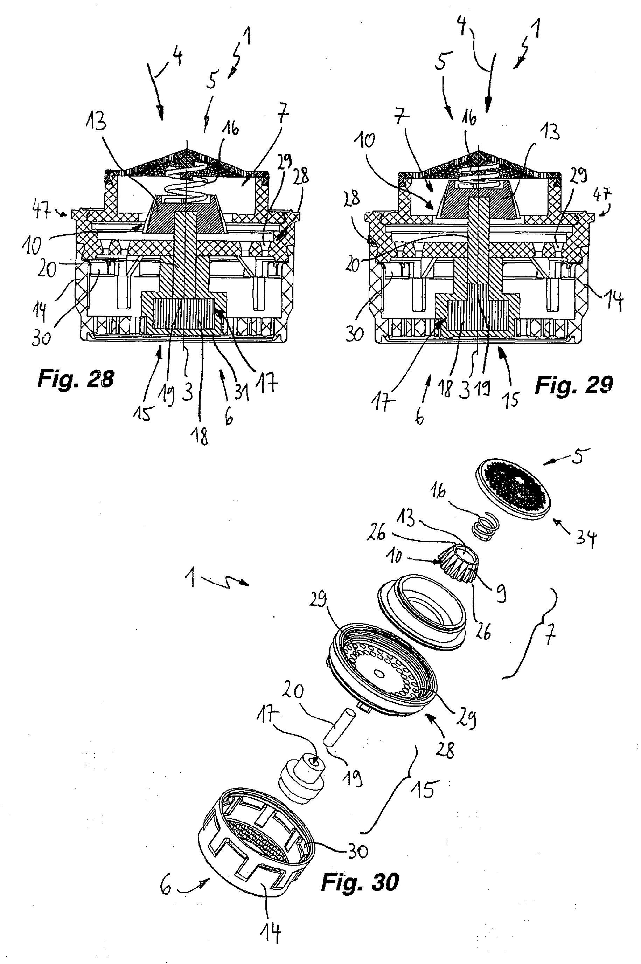

Figur 28 bis 30 zeigen ein weiteres erfindungsgemäßes Einbauteil 1. Bei dem Ausführungsbeispiel gemäß Figur 28 bis 30 sind wieder zu den vorbeschriebenen Ausführungsbeispielen funktionell und/oder konstruktiv gleichartige und/oder ähnliche Bauteile und Funktionseinheiten mit denselben Bezugszeichen bezeichnet und nicht noch einmal gesondert beschrieben. Die Ausführungen zu den Ausführungsbeispielen gemäß den Figuren 1 bis 27 gelten somit hier entsprechend.

Das Ausführungsbeispiel gemäß Figuren 28 bis 30 unterscheidet sich von dem Ausführungsbeispiel gemäß Figuren 20 bis 22 dadurch, dass kein Widerstandskörper 8 eingelegt ist. Die Funktionseinheit 7 definiert daher sowohl in der ersten Stellposition (Fig. 28) als auch in der zweiten Stellposition (Fig. 29) jeweils eine Volumenstromabhängigkeit 12, 48 vom Typ einer Drosselfunktion.

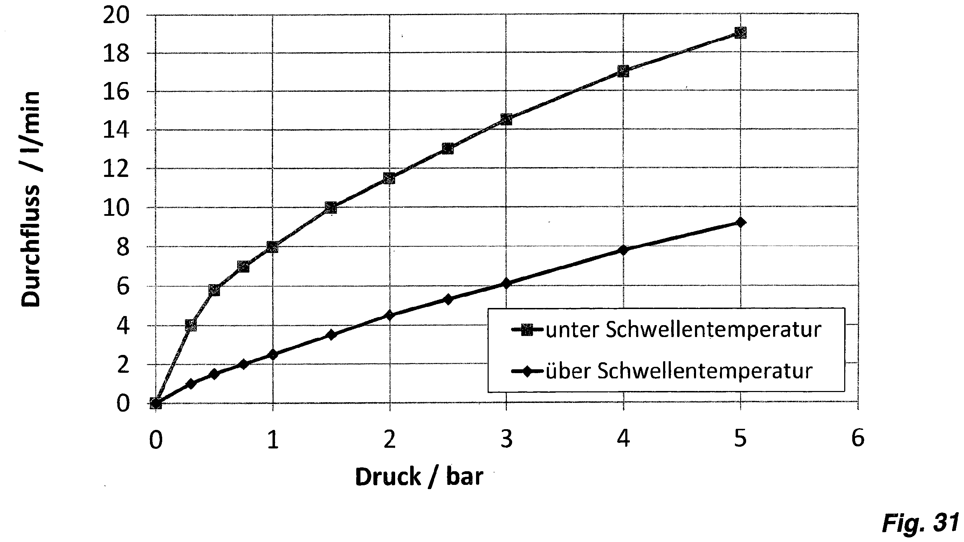

Diese Verhalten der Funktionseinheit 7 zeigt Figur 31 qualitativ: Unterhalb einer Schwellentemperatur (Threshold), also in der ersten Stellposition, definiert die Funktionseinheit 7 eine Volumenstromabhängigkeit 12. Oberhalb der Schwellentemperatur, also in der zweiten Stellposition, definiert die Funktionseinheit 7 eine Volumenstromabhängigkeit 48.

Die Volumenstromabhängigkeiten 12 und 48 gehören jeweils zu einer Drossel, wobei die Volumenstromabhängigkeit 48 gegenüber der Volumenstromabhängigkeit 12 einen erhöhten Strömungswiderstand beschreibt. Somit ist der Wasserverbrauch auch bei diesem Ausführungsbeispiel oberhalb der Schwellentemperatur reduziert.

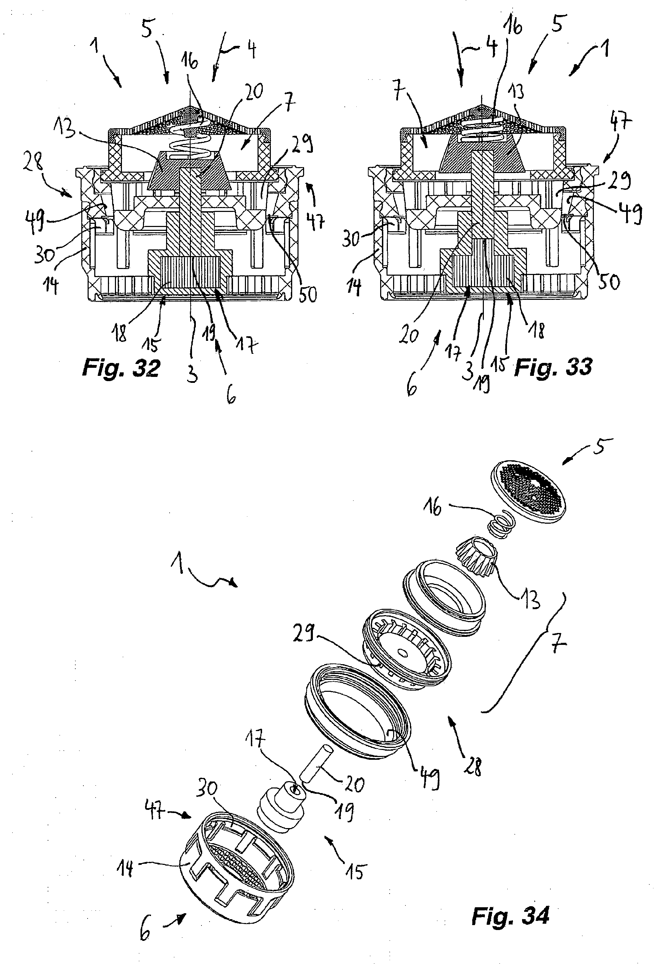

Figuren 32 bis 34 zeigen ein weiteres erfindungsgemäßes Einbauteil 1. Funktionell und/oder konstruktiv zu den vorangehenden Ausführungsbeispielen gleiche oder ähnliche Bauteile sind mit denselben Bezugszeichen beschrieben und nicht noch einmal gesondert beschrieben. Die Ausführungen zu den Figuren 1 bis 31 gelten hier entsprechend.

Das Ausführungsbeispiel gemäß Figuren 32 bis 34 unterscheidet sich von dem Ausführungsbeispiel gemäß Figuren 28 bis 30 durch die Ausgestaltung der Strahlzerlegungseinheit 28.

Im Unterschied zu jenem Ausführungsbeispiel sind bei dem Ausführungsbeispiel gemäß Figuren 32 bis 34 die Düsen 29 nicht axial ausgerichtet, sondern weisen radial nach außen. Das strömende Wasser wird so auf eine umlaufende, nach innen gerichtete Prallfläche 49 gerichtet und zerstäubt.

Im Anschluss an die Zerstäubung an der Prallfläche 49 gelangt das Wasser durch weitere Düsen 50 in den Einflussbereich der Lufteinlässe 30 und wird belüftet.

Das Ausführungsbeispiel gemäß Figuren 22 bis 34 realisiert Volumenstromabhängigkeiten 12, 48 gemäß Figur 31.

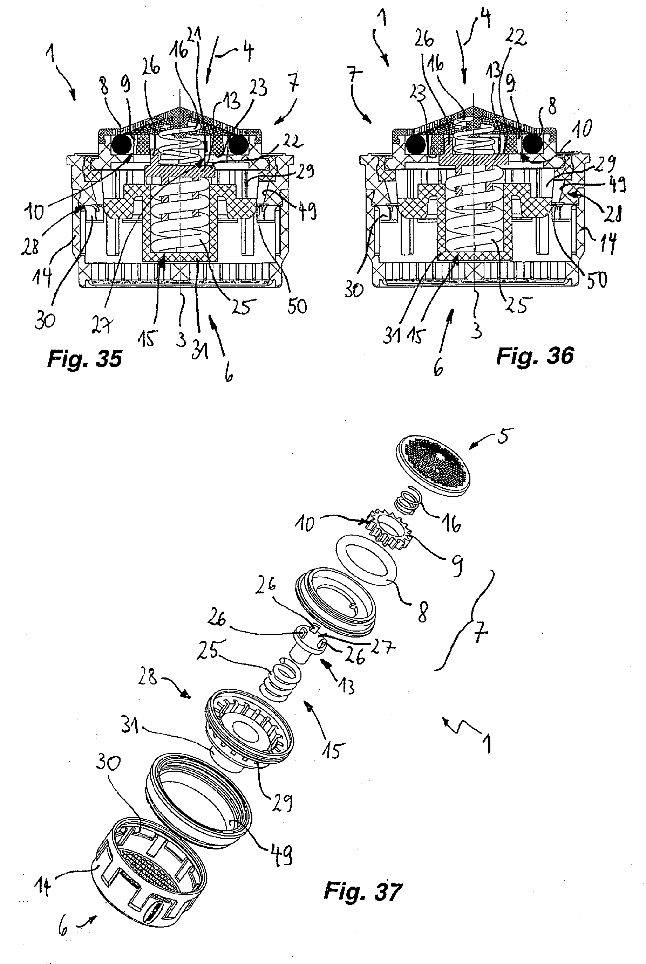

Figuren 35 bis 37 zeigen ein weiteres erfindungsgemäßes Einbauteil 1. Funktionell und/oder konstruktiv zu den vorangehenden Ausführungsbeispielen gleiche oder ähnliche Bauteile sind mit denselben Bezugszeichen beschrieben und nicht noch einmal gesondert beschrieben. Die Ausführungen zu den Figuren 1 bis 34 gelten hier entsprechend.

Das Ausführungsbeispiel gemäß Figuren 35 bis 37 unterscheidet sich von dem Ausführungsbeispiel gemäß Figuren 14 bis 16 durch die Ausgestaltung der Strahlzerlegungseinheit 28.

Die Strahlzerlegungseinheit 28 ist hier wie zu den Figuren 32 bis 34 beschrieben ausgebildet. Die Ausführungen zu den Figuren 32 bis 34 gelten somit entsprechend.

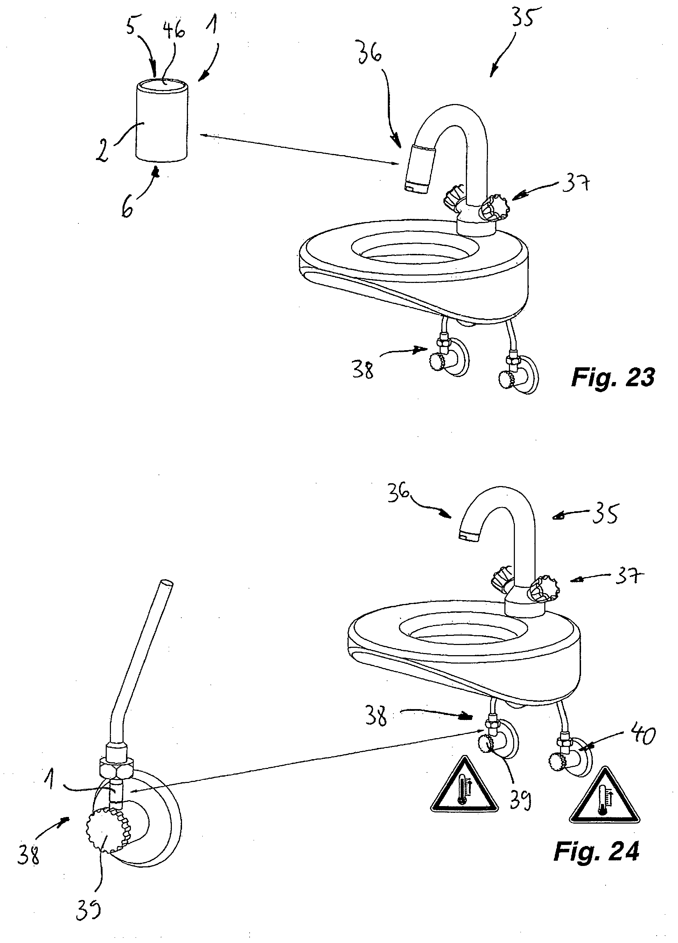

Figur 23 zeigt eine Verwendungsmöglichkeit des erfindungsgemäßen sanitären Einbauteils 1 bei einer im Ganzen mit 35 bezeichneten Sanitärarmatur.

Das Einbauteil 1, welches beispielsweise gemäß den Ausführungsbeispielen nach Figur 1 bis 22 oder auf sonstige Weise erfindungsgemäß ausgebildet sein kann, ist in einem Wasserauslauf 26, also in Strömungsrichtung hinter der Mischbatterie 37, angeordnet.

Je nachdem, welche Temperatur das über die Mischbatterie 37 eingestellte strömende Wasser am Wasserauslauf 36 aufweist, realisiert das Einbauteil 1 somit in der beschriebenen Weise die Volumenstromabhängigkeit 11 oder die Volumenstromabhängigkeit 12 gemäß Figur 4.

Somit kann zunächst, solange abgekühltes Wasser aus einem Warmwasserzulauf 38 zufließt, eine erhöhte Durchflussmenge durch den Wasserauslauf 36 eingestellt sein, um dieses abgekühlte Wasser möglichst schnell abfließen zu lassen.

Sobald über den Warmwasserzulauf 38 zum Wasserauslauf 36 Warmwasser mit der gewünschten Temperatur fließt, schaltet das sanitäre Einbauteil 1 beispielsweise die definierte Volumenstromabhängigkeit 11 gemäß Figur 4 in der beschriebenen Weise ein.

Figur 24 zeigt ein weiteres Ausführungsbeispiel einer erfindungsgemäßen Sanitärarmatur 35, bei welcher das sanitäre Einbauteil 1 im Warmwasserzulauf 38, also in Fließrichtung vor der Mischbatterie 37, angeordnet ist. Dies kann beispielsweise dadurch erreicht werden, dass das erfindungsgemäße sanitäre Einbauteil 1 direkt an einem Eckventil 39 angeordnet ist.

Somit kann Wasser aus dem Kaltwasserzulauf 40 unbeeinflusst von der Mengenregelungsfunktion des sanitären Einbauteils zum Wasserauslauf 36 strömen.

Im Übrigen gelten die Ausführungen zu Figur 23 bei dem Ausführungsbeispiel gemäß Figur 24 entsprechend.

Aus den Figuren 23 und 24 ist ersichtlich, dass das als Kartusche ausgebildete Einbauteil 1 einfach auch bei bestehenden Sanitärarmaturen 35 nachrüstbar ist, z.B. in mit entsprechenden Anschlussgewinden versehenen Anschlussstücken.

In diesem Zusammenhang sei noch erwähnt, dass die in den Figuren dargestellten Einbauteile 1 jeweils am Einlass 5 und am Auslass 6 mit einem Innengewinde 46 und/oder einem Außengewinde 47 versehen sind, um das Einbauteil 1 anzuschließen.

Bevorzugt sind liegt die erste Temperatur unterhalb einer Schwellentemperatur, während die zweite Temperatur oberhalb der Schwellentemperatur liegt.

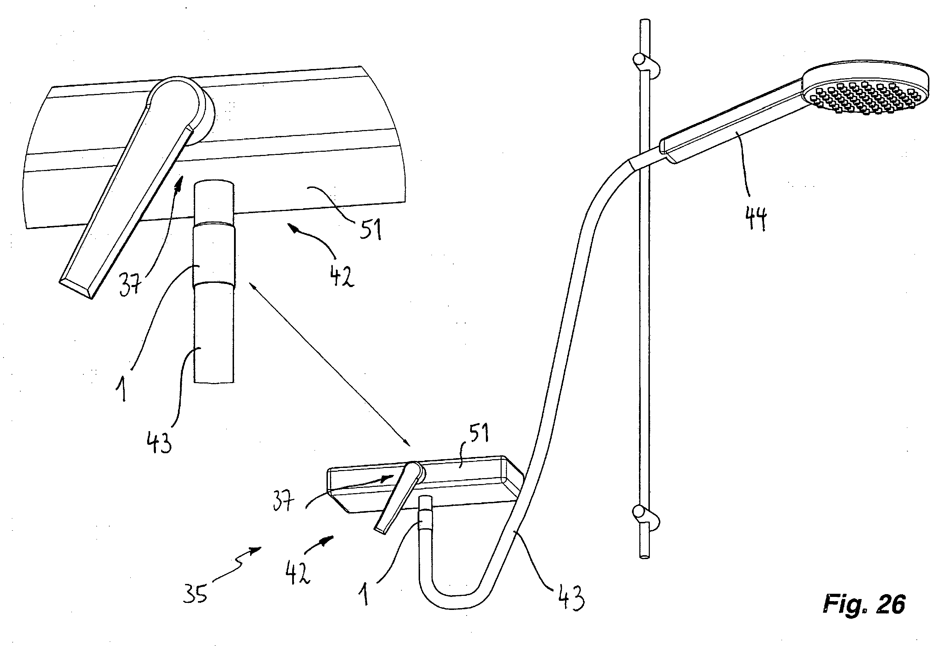

Figur 26 zeigt ein weiteres Ausführungsbeispiel einer erfindungsgemäßen Sanitärarmatur 35 in Form einer Duscharmatur 42 mit einem Brauseschlauch 43 und einem daran angeschlossenen Brausekopf 44. Das sanitäre Einbauteil 1 ist am Anfang eines Brauseschlauchs 43, also in Fließrichtung hinter der Mischbatterie 37, eingesetzt. Hierbei wird das Einbauteil 1 über ein Innengewinde 46 oder ein Außengewinde 47 mit dem Brauseschlauch 43 oder einem anderen Sanitärschlauch einerseits und der Sanitärarmatur 35 andererseits verschraubt.

Das Einbauteil 1 kann bei einem weiteren Ausführungsbeispiel zur Montage auch zumindest teilweise in das Aufnahmegehäuse 51 der Sanitärarmatur 35 eingesetzt und mit dieser verschraubt werden.

Bei dem sanitären Einbauteil 1, welches mit einer Funktionseinheit 7 einen Mengenregler bildet, wird vorgeschlagen, ein entlang eines Verstellweges verstellbares Stellelement 13 mit einer temperaturempfindlichen Antriebseinheit 15 derart zu koppeln, dass je nach Temperatur des das Einbauteil 1 durchströmenden Mediums unterschiedliche Stellpositionen des Stellelements 13 eingestellt sind, wobei die unterschiedlichen Stellpositionen jeweils voneinander verschiedene Volumenstromabhängigkeiten 11, 12, 45, 48 und/oder Strömungswiderstände realisieren.

### Bezugszeichenliste

- 1: sanitäres Einbauteil
- 2: Einbauhülse
- 3: Achse
- 4: Durchströmungsweg
- 5: Einlass
- 6: Auslass
- 7: Funktionseinheit
- 8: Widerstandskörper
- 9: Aufnahmeteil
- 10: Öffnungsquerschnitt
- 11: Volumenstromabhängigkeit
- 12: Volumenstromabhängigkeit
- 13: Stellelement
- 14: Gehäuse
- 15: Antriebseinheit
- 16: Rückstellfeder
- 17: Aufnahmekammer
- 18: temperatursensitives Medium
- 19: bewegliche Kammerwand
- 20: Kolben
- 21: Durchströmöffnung
- 22: Kontaktfläche
- 23: Gegenkontaktfläche
- 25: Antriebselement
- 26: Führungselement
- 27: Durchtrittsöffnung
- 28: Strahlzerlegungseinheit
- 29: Düse
- 30: Lufteinlass
- 31: Rahmen
- 32: Bimetall-Scheibe
- 33: Führungszapfen
- 34: Vorsatzsieb
- 35: Sanitäramatur
- 36: Wasserauslauf
- 37: Mischbatterie
- 38: Warmwasserzulauf
- 39: Eckventil
- 40: Kaltwasserzulauf
- 41: Steg
- 42: Duscharmatur
- 43: Brauseschlauch
- 44: Brausekopf
- 45: Volumenstromabhängigkeit
- 46: Innengewinde
- 47: Außengewinde
- 48: Volumenstromabhängigkeit
- 49: Prallfläche
- 50: weitere Düse
- 51: Aufnahmegehäuse

## Patentansprüche

1. Sanitäres Einbauteil (1), mit einer, in einem Durchströmungsweg (4) des Einbauteiles (1) angeordneten Funktionseinheit (7), die (7) ein beweglich angeordnetes Stellelement (13) aufweist, das (13) entlang eines Verstellweges wenigstens zwischen :einer ersten Stellposition und einer zweiten Stellposition lageveränderbar ist, wobei eine temperatursensitive Antriebseinheit (15) das Stellelement (13) derart beaufschlagt, dass das Stellelement (13) durch eine Temperaturänderung an der Antriebseinheit (15) längs des Verstellweges lageveränderbar ist, **dadurch gekennzeichnet, dass** die Funktionseinheit (7) einen Volumenstrom in Abhängigkeit von einem Druck als Volumenstromabhängigkeit (11, 12, 45, 48) definiert, und dass die definierte Volumenstromabhängigkeit (11, 12, 45, 48) durch eine Lageveränderung des Stellelements (13) längs des Verstellweges veränderbar ist.

2. Sanitäres Einbauteil (1) nach Anspruch 1, **dadurch gekennzeichnet, dass** die temperatursensitive Antriebseinheit (15) in wenigstens einer Dimension eine temperaturabhängige Ausdehnung aufweist und/oder dass eine Rückstellfeder (16) vorhanden ist, welche das Stellelement (13) bei einer Abkühlung der Antriebseinheit (15) auf oder unter eine erste Temperatur zurückstellt, insbesondere in die erste Stellposition.

3. Sanitäres Einbauteil (1) nach Anspruch 1 oder 2, **dadurch gekennzeichnet, dass** die temperatursensitive Antriebseinheit (15) eine mit einem temperatursensitiven Medium (18) befüllte Aufnahmekammer (17) aufweist, wobei wenigstens eine bewegliche Kammerwand (19) mit dem Stellelement (13) in Wirkverbindung steht und das Stellelement (13) beaufschlagt.

4. Sanitäres Einbauteile (1) nach einem der Ansprüche 1 bis 3, **dadurch gekennzeichnet,:dass** die Antriebseinheit (15) ein Antriebselement (25) aus einem Material mit Formgedächtnis aufweist und/oder dass die Antriebseinheit (15) wenigstens ein Bimetall-Element, insbesondere eine Bimetall-Scheibe (32), bevorzugt mehrere hintereinander angeordnete Bimetall-Scheiben (32), aufweist.

5. Sanitäres Einbauteil (1) nach einem der Ansprüche 1 bis 4, **dadurch gekennzeichnet, dass** mit dem Stellelement (13) in der ersten Stellposition eine Durchströmungsöffnung (21) im Durchströmungsweg (4) freigegeben oder geöffnet ist und/oder dass mit dem Stellelement (13) in der zweiten Stellposition die oder eine Durchströmöffnung (21) im Durchströmungsweg (4) verschlossen ist.

6. Sanitäres Einbauteil (1) nach einem der Ansprüche 1 bis 5, **dadurch gekennzeichnet, dass** der Verstellweg zumindest an einem der zweiten Stellposition näheren Wegende anschlagfrei eingerichtet ist und/oder dass sich der Verstellweg zwischen der ersten Stellposition und einer Stell-Endposition erstreckt, wobei die zweite Stellposition zwischen der ersten Stellposition und der Stell-Endposition angeordnet ist.

7. Sanitäres Einbauteil (1) nach einem der Ansprüche 1 bis 6, **dadurch gekennzeichnet, dass** das Stellelement (13) eine Kontaktfläche (22) aufweist, welche zum Verschluss der oder einer Durchströmöffnung (21) mit einer Gegenkontaktfläche (23) vorzugsweise abdichtend zusammenwirkt, und/oder dass die oder eine Kontaktfläche (22) des Stellelements (13) an der oder einer Gegenkontaktfläche (23) eines Gehäuses (14) oder Rahmens (31) durch eine Lageveränderung des Stellelements (13) längs des Verstellweges vorbeibewegbar ist.

8. Sanitäres Einbauteil (1) nach Anspruch 7, **dadurch gekennzeichnet, dass** die oder eine Kontaktfläche (22) längs oder tangential zu dem Verstellweg an dem Stellelement (13) ausgerichtet ist und/oder dass das Stellelement (13) zumindest in der ersten Stellposition, insbesondere in allen Stellpositionen längs des Verstellweges, mit einem Führungselement (26) in die oder eine Durchströmöffnung (21) eingreift.

9. Sanitäres Einbauteil (1) nach Anspruch 7 oder 8, **dadurch gekennzeichnet, dass** die Kontaktfläche (22) koaxial zu der Gegenkontaktfläche (23) ausgerichtet ist.

10. Sanitäres Einbauteil (1) nach einem der Ansprüche 1 bis 9, **dadurch gekennzeichnet, dass** die Funktionseinheit (7) einen mit steigendem Druck zunehmenden Strömungswiderstand im Durchströmungsweg (4) bildet, insbesondere bei in der zweiten Stellposition befindlichem Stellelement (13), und/oder dass die Funktionseinheit (7) einen durchströmten Öffnungsquerschnitt (10) definiert, dessen Querschnittsfläche sich bei einem zunehmenden Druckge.fälle über der Funktionseinheit (7) verkleinert.

11. Sanitäres Einbauteil (1) nach einem der Ansprüche 1 bis 10, **dadurch gekennzeichnet, dass** die Antriebseinheit (15) im Durchströmungsweg (4) umströmbar angeordnet ist und/oder dass die Antriebseinheit (15) in einer Fließrichtung des Durchströmungsweges (4) vor oder hinter der Funktionseinheit (7) angeordnet ist.

12. Sanitäres Einbauteil (1) nach einem der Ansprüche 1 bis 11, dadurch gekenntzeichnet, dass die Volumenstromabhängigkeit (11, 12, 45, 48) unterhalb einer Schwellentemperatur eine Drosselfunktion und/oder oberhalb der oder einer Schwellentemperatur eine Mengenbegrenzungsfunktion beschreibt.

13. Sanitäres Einbauteil (1) nach einem der Ansprüche 1 bis 12, **dadurch gekennzeichnet, dass** das Einbauteil (1) als Strahlregler ausgebildet ist und/oder dass die das Einbauteil mit einem Gewinde (46, 47) versehen und in ein Aufnahmegehäuse einsetzbar ist.

14. Sanitärarmatur (35), die einen Wasserzulauf (38) und einen Wasserauslauf (36) hat, **dadurch gekennzeichnet, dass** ein Einbauteil (1) nach einem der vorangehenden Ansprüche in dem Warmwasserzulauf (38) und/oder in dem Wasserauslauf (36) der Sanitärarmatur (35) angeordnet ist.

15. Verfahren zur Steuerung einer Durchflussmenge von strömendem Wasser mittels einem sanitären Einbauteil gemäss einem der Ansprüche 1 bis 14, wobei im sanitären Einbauteil (1) eine Volumenstromabhängigkeit (11, 12, 45, 48), welche einen Volumenstrom in Abhängigkeit von einem Druck definiert, in Abhängigkeit von einer Temperatur des strömenden Mediums eingestellt wird, wobei die Volumenstromabhängigkeit (11, 12, 45, 48) bei wenigstens einem Druck des strömenden Mediums zu einer ersten Temperatur eine erste Durchflussmenge und zu einer zweiten Temperatur, die höher als die erste Temperatur ist, eine zweite Durchflussmenge, die geringer als die erste Durchflussmenge ist, definiert.

16. Verfahren nach Anspruch 15, **dadurch gekennzeichnet, dass** die Volumenstromabhängigkeit (11, 12, 45, 48) bei oder oberhalb der zweiten Temperatur einen erhöhten Strömungswiderstand eines Durchströmungsweges (4) und/oder eine Begrenzung der Durchflussmenge definiert und/oder dass die Volumenstromabhängigkeit (11, 12, 45, 48) bei oder oberhalb der zweiten Temperatur einem mit steigendem Druck zunehmenden Strömungswiderstand des oder eines Durchströmungsweges (4) definiert.

17. Verfahren nach Anspruch 15 oder 16, **dadurch gekennzeichnet, dass** unterhalb einer Schwellentemperatur des strömenden Mediums, insbesondere bei der ersten Temperatur, eine Volumenstromabhängigkeit (11, 12, 45, 48) einer Drosselfunktion eingestellt wird und/oder dass oberhalb der oder einer Schwellentemperatur des strömenden Mediums, insbesondere bei der zweiten Temperatur, eine Volumenstromabhängigkeit (11, 12, 45, 48) einer Mengenbegrenzungsfunktion eingestellt wird.

## Claims

1. Sanitary installation part (1), having a functional unit (7) which is disposed in a throughflow path (4) of the installation part (1), which functional unit (7) comprises a movably disposed setting element (13), which setting element (13) can change position along a displacement path at least between a first setting position and a second setting position, wherein a temperature-sensitive drive unit (15) acts upon the setting element (13) in such a way that the setting element (13) can change position along the displacement path as a result of a change in temperature at the drive unit (15), **characterised in that** the functional unit (7) defines a volume flow as a volume flow dependency (11, 12, 45, 48) in dependence upon a pressure, and that the defined volume flow dependency (11, 12, 45, 48) can be modified by a change in a position of the setting element (13) along the displacement path.

2. Sanitary installation part (1) as claimed in claim 1, **characterised in that** the temperature-sensitive drive unit (15) comprises a temperature-dependent expansion in at least one dimension and/or that a resetting spring (16) is provided which resets the setting element (13) when the drive unit (15) cools down to or below a first temperature, in particular to the first setting position.

3. Sanitary installation part (1) as claimed in claim 1 or 2, **characterised in that** the temperature-sensitive drive unit (15) comprises a receiving chamber (17) filled with a temperature-sensitive medium (18), wherein at least one movable chamber wall (19) is operatively connected to the setting element (13) and acts upon the setting element (13).

4. Sanitary installation part (1) as claimed in any one of claims 1 to 3, **characterised in that** the drive unit (15) comprises a drive element (25) made from a shape memory material and/or that the drive unit (15) comprises at least one bimetallic element, in particular, a bimetallic disc (32), preferably a plurality of bimetallic discs (32) disposed one behind another.

5. Sanitary installation part (1) as claimed in any one of claims 1 to 4, **characterised in that** with the setting element (13) in the first setting position a throughflow opening (21) in the throughflow path (4) is exposed or opened and/or that with the setting element (13) in the second setting position the or a throughflow opening (21) in the throughflow path (4) is closed.

6. Sanitary installation part (1) as claimed in any one of claims 1 to 5, **characterised in that** the displacement path is set up in a stop-free manner at least at a path end closer to the second setting position and/or that the displacement path extends between the first setting position and a setting end position, wherein the second setting position is located between the first setting position and the setting end position.

7. Sanitary installation part (1) as claimed in any one of claims 1 to 6, **characterised in that** the setting element (13) comprises a contact surface (22) which cooperates preferably in a sealing manner with a counter contact surface (23) in order to close the or a throughflow opening (21), and/or that the or a contact surface (22) of the setting element (13) can be moved past the or a counter contact surface (23) of a housing (14) or frame (31) by a change in position of the setting element (13) along the displacement path.

8. Sanitary installation part (1) as claimed in claim 7, **characterised in that** the or a contact surface (22) is oriented longitudinally or tangentially with respect to the displacement path on the setting element (13) and/or that the setting element (13) engages with a guide element (26) in the or a throughflow opening (21) at least in the first setting position, in particular, in all setting positions along the displacement path.

9. Sanitary installation part (1) as claimed in claim 7 or 8, **characterised in that** the contact surface (22) is oriented coaxially with respect to the counter contact surface (23).

10. Sanitary installation part (1) as claimed in any one of claims 1 to 9, **characterised in that** the functional unit (7) forms a flow resistance in the throughflow path (4), which increases as the pressure rises, in particular, when the setting element (13) is in the second setting positon, and/or that the functional unit (7) defines an opening cross section (10) through which a flow passes and the cross sectional area of which decreases as a pressure gradient increases over the functional unit (7).

11. Sanitary installation part (1) as claimed in any one of claims 1 to 10, **characterised in that** the drive unit (15) is disposed in the throughflow path (4) such that a flow can pass around it and/or that the drive unit (15) is disposed in a flow direction of the throughflow path (4) upstream or downstream of the functional unit (7).

12. Sanitary installation part (1) as claimed in any one of claims 1 to 11, **characterised in that** the volume flow dependency (11, 12, 45, 48) describes a throttle function below a threshold temperature and/or a quantity limiting function above the or a threshold temperature.

13. Sanitary installation part (1) as claimed in any one of claims 1 to 12, **characterised in that** the installation part (1) is designed as a flow regulator and/or that the installation part is provided with a thread (46, 47) and can be inserted into a receiving housing.

14. Sanitary fitting (35) which has a water inlet (38) and a water outlet (36), **characterised in that** an installation part (1) as claimed in any one of the preceding claims is disposed in the hot water inlet (38) and/or in the water outlet (36) of the sanitary fitting (35).

15. Method for controlling a throughflow quantity of flowing water by means of a sanitary installation part as claimed in any one of claims 1 to 14, wherein in the sanitary installation part (1), a volume flow dependency (11, 12, 45, 48), which defines a volume flow in dependence upon a pressure, is adjusted in dependence upon a temperature of the flowing medium, wherein the volume flow dependency (11, 12, 45, 48) defines a first throughflow quantity at at least one pressure of the flowing medium at a first temperature and defines a second throughflow quantity, which is smaller than the first throughflow quantity, at a second temperature which is higher than the first temperature.

16. Method as claimed in claim 15, **characterised in that** at or above the second temperature, the volume flow dependency (11, 12, 45, 48) defines an increased flow resistance of a throughflow path (4) and/or defines a limiting of the throughflow quantity and/or that, at or above the second temperature, the volume flow dependency (11, 12, 45, 48) defines a flow resistance of the or a throughflow path (4), which increases as the pressure rises.

17. Method as claimed in claim 15 or 16, **characterised in that** below a threshold temperature of the flowing medium, in particular, at the first temperature, a volume flow dependency (11, 12, 45, 48) of a throttle function is adjusted and/or that above the or a threshold temperature of the flowing medium, in particular, at the second temperature, a volume flow dependency (11, 12, 45, 48) of a quantity limiting function is adjusted.

## Revendications

1. Insert sanitaire (1), avec une unité fonctionnelle (7) disposée dans un chemin d'écoulement (4) de l'insert (1), qui (7) présente un élément de réglage mobile (13), dont (13) la position peut être modifiée le long d'une course de réglage au moins entre une première position de réglage et une deuxième position de réglage, dans lequel une unité d'entraînement (15) sensible à la température agit sur l'élément de réglage (13) de telle manière que l'élément de réglage (13) puisse changer de position le long de la course de réglage par une variation de température de l'unité d'entraînement (15), **caractérisé en ce que** l'unité fonctionnelle (7) définit un courant volumique en fonction d'une pression comme relation de dépendance du courant volumique (11, 12, 45, 48) et **en ce que** la dépendance du courant volumique (11, 12, 45, 48) définie peut varier par un changement de position de l'élément de réglage (13) le long de la course de réglage.

2. Insert sanitaire (1) selon la revendication 1, **caractérisé en ce que** l'unité d'entraînement (15) sensible à la température présente dans au moins une dimension un allongement dépendant de la température et/ou en ce qu'il se trouve un ressort de rappel (16), qui rappelle l'élément de réglage (13), en particulier dans la première position de réglage, dans le cas d'un refroidissement de l'unité d'entraînement (15) à ou en dessous d'une première température.

3. Insert sanitaire (1) selon la revendication 1 ou 2, **caractérisé en ce que** l'unité d'entraînement (15) sensible à la température présente une chambre de réception (17) remplie d'un fluide sensible à la température (18), dans lequel au moins une paroi de chambre mobile (19) est en liaison active avec l'élément de réglage (13) et agit sur l'élément de réglage (13).

4. Insert sanitaire (1) selon l'une quelconque des revendications 1 à 3, **caractérisé en ce que** l'unité d'entraînement (15) présente un élément d'entraînement (25) en un matériau à mémoire de forme et/ou **en ce que** l'unité d'entraînement (15) présente au moins un élément bimétallique, en particulier une rondelle bimétallique (32), de préférence plusieurs rondelles bimétalliques (32) disposées les unes derrière les autres.

5. Insert sanitaire (1) selon l'une quelconque des revendications 1 à 4, **caractérisé en ce qu'**une ouverture d'écoulement (21) dans le chemin d'écoulement (4) est libérée ou ouverte avec l'élément de réglage (13) dans la première position de réglage et/ou **en ce que** la ou une ouverture d'écoulement (21) dans le chemin d'écoulement (4) est fermée avec l'élément de réglage (13) dans la deuxième position de réglage.

6. Insert sanitaire (1) selon l'une quelconque des revendications 1 à 5, **caractérisé en ce que** la course de réglage est réalisée sans butée au moins à une fin de course plus proche de la deuxième position de réglage et/ou en ce que la course de réglage s'étend entre la première position de réglage et une position finale de réglage, dans lequel la deuxième position de réglage est disposée entre la première position de réglage et la position finale de réglage.

7. Insert sanitaire (1) selon l'une quelconque des revendications 1 à 6, **caractérisé en ce que** l'élément de réglage (13) présente une face de contact (22), qui coopère de préférence de façon étanche avec une face de contact opposée (23) pour la fermeture de la ou d'une ouverture d'écoulement (21) et/ou **en ce que** la ou une face de contact (22) de l'élément de réglage (13) peut être déplacée devant la ou une face de contact opposée (23) d'un boîtier (14) ou d'un cadre (31) par un changement de position de l'élément de réglage (13) le long de la course de réglage.

8. Insert sanitaire (1) selon la revendication 7, **caractérisé en ce que** la ou une face de contact (22) est orientée sur l'élément de réglage (13) de façon longitudinale ou tangentielle à la course de réglage et/ou en ce que l'élément de réglage (13) pénètre, au moins dans la première position de réglage, en particulier dans toutes les positions de réglage le long de la course de réglage, avec un élément de guidage (26) dans la ou une ouverture d'écoulement (21).

9. Insert sanitaire (1) selon la revendication 7 ou 8, **caractérisé en ce que** la face de contact (22) est orientée coaxialement à la face de contact opposée (23).

10. Insert sanitaire (1) selon l'une quelconque des revendications 1 à 9, **caractérisé en ce que** l'unité fonctionnelle (7) forme dans le chemin d'écoulement (4) une résistance à l'écoulement qui augmente lorsque la pression augmente, en particulier lorsque l'élément de réglage (13) se trouve dans la deuxième position de réglage et/ou **en ce que** l'unité fonctionnelle (7) définit une section transversale d'ouverture (10) traversée, dont la surface de la section transversale diminue lors d'une chute de pression croissante sur l'unité fonctionnelle (7).

11. Insert sanitaire (1) selon l'une quelconque des revendications 1 à 10, **caractérisé en ce que** l'unité d'entraînement (15) est disposée de façon réversible dans le chemin d'écoulement (4) et/ou **en ce que** l'unité d'entraînement (15) est disposée avant ou après l'unité fonctionnelle (7) dans une direction d'écoulement du chemin d'écoulement (4).

12. Insert sanitaire (1) selon l'une quelconque des revendications 1 à 11, **caractérisé en ce que** la dépendance du courant volumique (11, 12, 45, 48) décrit une fonction d'étranglement en dessous d'une température de seuil et/ou une fonction de limitation de débit au-dessus de la ou d'une température de seuil.

13. Insert sanitaire (1) selon l'une quelconque des revendications 1 à 12, **caractérisé en ce que** l'insert (1) est réalisé sous forme de régulateur de jet et/ou **en ce que** l'insert est muni d'un filet (46, 47) et peut être monté dans un boîtier de réception.

14. Armature sanitaire (35), qui comporte une arrivée d'eau (38) et une sortie d'eau (36), **caractérisée en ce qu'**un insert (1) selon l'une quelconque des revendications précédentes est disposé dans l'arrivée d'eau chaude (38) et/ou dans la sortie d'eau (36) de l'armature sanitaire (35).

15. Procédé de commande d'un débit d'eau en écoulement au moyen d'un insert sanitaire selon l'une quelconque des revendications 1 à 14, dans lequel une dépendance du courant volumique (11, 12, 45, 48), qui définit un courant volumique en fonction d'une pression, est réglée dans l'insert sanitaire (1) en fonction d'une température du fluide en écoulement, dans lequel la dépendance du courant volumique (11, 12, 45, 48) définit, pour au moins une pression du fluide en écoulement à une première température, un premier débit et à une deuxième température, qui est plus élevée que la première température, un deuxième débit, qui est inférieur au premier débit.

16. Procédé selon la revendication 15, **caractérisé en ce que** la dépendance du courant volumique (11, 12, 45, 48) définit à ou au-dessus de la deuxième température une résistance à l'écoulement accrue d'un chemin d'écoulement (4) et/ou une limitation du débit et/ou en ce que la dépendance du courant volumique (11, 12, 45, 48) définit à ou au-dessus de la deuxième température, une résistance à l'écoulement du ou d'un chemin d'écoulement (4) qui augmente lorsque la pression augmente.

17. Procédé selon la revendication 15 ou 16, **caractérisé en ce qu'**en dessous d'une température de seuil du fluide en écoulement, en particulier à la première température, on règle une dépendance du courant volumique (11, 12, 45, 48) par rapport à une fonction d'étranglement et/ou **en ce qu'**au-dessus de la ou d'une température de seuil du fluide en écoulement, en particulier à la deuxième température, on règle une dépendance du courant volumique (11, 12, 45, 48) par rapport à une fonction de limitation de débit.
